# EUROPEAN PATENT SPECIFICATION

(11) **EP 3 829 071 B1**
(45) Date of publication and mention of the grant of the patent: **19.07.2023**
(21) Application number: 19212465.9
(22) Date of filing: 29.11.2019
(51) Int. Cl.: H04B 5/00

(54) **METHOD, APPARATUSES AND TEST SYSTEM FOR TRANSFERRING DATA DURING POWER TRANSFER IN A WIRELESS POWER TRANSFER SYSTEM**
VERFAHREN, VORRICHTUNGEN UND TESTSYSTEM ZUR DATENÜBERTRAGUNG WÄHREND DER ENERGIEÜBERTRAGUNG IN EINEM DRAHTLOSEN ENERGIEÜBERTRAGUNGSSYSTEM
PROCÉDÉ, APPAREILS ET SYSTÈME DE TEST POUR LE TRANSFERT DE DONNÉES PENDANT UN TRANSFERT DE PUISSANCE DANS UN SYSTÈME DE TRANSFERT DE PUISSANCE SANS FIL

(43) Date of publication of application: 02.06.2021
(73) Proprietor: ElectDis AB, 211 21 Malmö (SE)
(72) Inventor: Swaans, Laurens, 217 57 Malmö (SE); Lau, Buon Kiong, 227 36 Lund (SE)
(74) Representative: Ström & Gulliksson AB

(56) References cited:
- EP-A1- 3 073 609
- EP-A1- 3 104 498
- EP-A1- 3 420 629
- EP-A1- 3 542 475
- WO-A1-2016/034410
- US-A1- 2018 366 984
- US-A1- 2019 052 117

## Description

### TECHNICAL FIELD

The present invention relates to wireless power transfer, specifically to inductive wireless power transfer. Even more specifically, the present invention relates to reliable communication of data during power transfer.

### BACKGROUND

Wireless power transfer is showing strong progress, especially for wireless battery charging of mobile devices such as, for instance, mobile terminals, tablet computers, laptop computers, cameras, audio players, rechargeable toothbrushes, wireless headsets, as well as various other consumer products and appliances.

Typically, devices that support wireless charging rely on magnetic induction between planar coils. Two kinds of devices are involved, namely devices that provide wireless power (referred to as base stations or wireless power transmit devices), and devices that consume wireless power (referred to as mobile devices or power receive devices). Power transfer takes place from e.g. a base station to a mobile device. For this purpose, a base station contains a subsystem (a power transmitter) that comprises a primary coil, whereas a mobile device contains a subsystem (a power receiver) that comprises a secondary coil. In operation, the primary coil and the secondary coil will constitute the two halves of a coreless transformer. Typically, a power transmit device has a flat surface, on top of which a user can place one or more mobile devices (also typically having a flat surface), so as to enjoy wireless battery charging or operational power supply for the mobile device(s) placed on the base station. Common for all types of inductive power transfer is that the efficiency of the power transfer will depend on the distance between the coils and the alignment of the coils.

The Wireless Power Consortium has developed a wireless power transfer standard known as Qi. Other known wireless power transfer approaches include Alliance for Wireless Power, and Power Matters Alliance.

The wireless power transfer standard known as Qi by the Wireless Power Consortium will be referred to, without limitation, throughout this document as the presently preferred wireless power transfer manner applicable to the present invention. However, the invention may generally be applied also to other wireless power transfer standards or approaches, including but not limited to the ones mentioned above. Devices complying with Qi will be configured to interact according to a specified scheme before power transfer is initiated. The scheme moves from a selection state to a ping state and further to an identification & configuration state that is followed by a power transfer state. When the devices are in the power transfer state, power is transferred from the power transmit device to the power receive device. During the power transfer, the power receive device evaluates the power received and communicates desired increases or decreases in power to the power transmit device using a control error packet. The power transmit device will adjust its transferred power as requested by the power receive device in the control error packet. If the control error packet is not received as expected by the power transmit device, the power transmit device aborts the power transfer and the system reverts to the selection state.

This means that any failure in the communication from the power receive device to the power transmit device will result in a restart of the power transfer scheme. Each restart of the power transfer scheme may result in e.g. a mobile phone indicating interrupted charging, increased charging time due to the initiation process and/or reduced efficiency of the charging.

In US 2019/052117, a method of communication with a wireless power receiver during a power transfer phase is presented including receiving from a wireless power receiver a receive packet and transmitting a transmit packet within a time after receipt of the receive packet, the transmit packet being other than an acknowledgment packet. A corresponding method for communication with a wireless power transmitter during a power transfer phase is also presented.

EP 3420629 describes a power transmitter of a wireless power transfer system that provides wireless power to a power receiver. The power transmitter comprises a variable resonance circuit generating an inductive power transfer signal in response to a drive signal. The resonance circuit comprises a capacitive and inductive impedance, at least one of which is variable. The resonance frequency can be varied by at least one of the impedances being variable in response to a control signal. An adapter generates the control signal in response to data values such that the variable resonance frequency follows the variations in a drive frequency resulting from the frequency modulation of a drive signal.

EP 3542475 presents a testing system for use in testing of wireless power transfer. The testing system has at least one wireless power receiver circuit for receiving inductive power from an external wireless power transmitter. The testing system is arranged to detect received inductive power at at least two operating frequencies relating to both a wireless power standard and a wireless communication standard.

From the above it is understood that there is room for improvements.

### SUMMARY

An object of the present invention is to provide a new type of method for data communication in a wireless power transfer system which is improved over prior art and which eliminates or at least mitigates the drawbacks discussed above. More specifically, an object of the invention is to provide an improved method for data communication in a wireless power transfer system that is able to reliably and efficiently communicate data during power transfer. These objects are achieved by the technique set forth in the appended independent claims with preferred embodiments defined in the dependent claims related thereto.

In a first aspect, a method for transferring data during power transfer in a wireless power transfer system is presented. The wireless power transfer system comprises a power transmit device arranged to transfer power over an inductive wireless power transfer interface operating at a transmit frequency to a power receive device. The wireless power transfer system being adapted to transfer information at half duplex using Frequency Shift Keying, FSK, in one direction and Amplitude Shift Keying, ASK, in the other direction. The method comprises transferring, at the transmit frequency by the power transmit device, power to the power receive device. During the transferring, transmitting, at the transmit frequency by one of the power transmit device or the power receive device, a first data packet to the other of the power transmit device or the power receive device using one of two modulation types being FSK or ASK. During the transmitting, determining, by the device transmitting the first data packet, if a signaling condition is fulfilled, and if the signaling condition is fulfilled, changing a data communication configuration of the device transmitting the first data packet.

In one variant of the method, the power transmit device is configured to transmit information using FSK and receive information using ASK. Further to this, the power receive device is configured to transmit information using ASK and to receive information using FSK. This is beneficial since it is an efficient setup and the way communication is performed in many standardized ways of doing wireless power transfer.

In a further variant of the method, the data communication configuration changed is one of a predefined or configurable set of modulation parameters comprising at least one of one or more modulation indexes, one or more symbol rates or one or more bits per symbol values. Having a flexibility in the change of modulation parameters enables responsiveness to changes in the wireless power transfer system and allows for optimization of data transfer.

In another variant of the method, the device transmitting the first data packet is the power receive device and the data communication configuration changed is a modulation index in the form of an amplitude deviation. One effect of this that the amplitude deviation can be optimized to ensure good signaling conditions with optimized power transfer.

In yet another variant of the method, the device transmitting the first data packet is the power transmit device and the data communication configuration changed being a change in the transmit frequency and/or a modulation index in the form a frequency deviation. One effect of this that the transmit frequency and/or the modulation index can be optimized to ensure good signaling conditions with optimized power transfer.

In one variant of the method, determining if a signaling condition is fulfilled comprises evaluating a modulation accuracy of a signal comprising the first data packet and if the evaluated modulation accuracy is lower than a modulation accuracy threshold, the signaling condition is determined to be fulfilled. Evaluating the modulation accuracy allows the configuration to be changed such that data transfer can be optimized to ensure good signaling conditions with optimized power transfer.

In a further variant of the method, evaluating the modulation accuracy comprises evaluating an amplitude of the signal comprising the first data packet. Evaluating the amplitude means that poor quality or inefficient amplitudes may be detected and the signaling can be optimized to ensure good signaling conditions with optimized power transfer.

In another variant of the method, the step of changing comprises, iteratively, changing the configuration until the signaling condition is no longer determined to be fulfilled or a predefined or configurable set of configurations have been evaluated. By changing a configuration and re-evaluating the signal condition makes it possible to efficiently configure the signaling such that a substantially optimal configuration is found.

In yet another variant of the method, the iteratively changing further comprises evaluating a Signal Quality Indicator, SQI, and/or a transferred power for each of the predefined or configurable set of data communication configurations. In addition to this, the iteratively changing further comprises, if at least one signaling condition is fulfilled for each of the predefined or configurable set of data communication configurations, change to the configuration having had the highest SQI and/or the highest transferred power. By changing a configuration and re-evaluating the signal condition and the SQI makes it possible to efficiently configure the signaling such that a substantially optimal configuration is found.

In one variant of the method, the signaling condition is determined to be fulfilled if an operational feedback is received from the device receiving the first packet. Allowing the receiving device to feedback operational feedback enables a closed loop system comprising both devices and this makes it possible to efficiently configure the signaling such that a substantially optimal configuration is found.

In a further variant of the method it further comprises receiving, by the device not transmitting the first data packet, the first data packet. During the receiving, evaluating, by the device not transmitting the first data packet, a signal quality of the signal comprising the first packet. If the evaluated quality of the signal comprising the first data packet fails to meet a threshold signal quality, the device not transmitting the first data packet transmits, at the transmit frequency operational information using the other of said one of two modulation types being FSK or ASK, thereby providing said operational feedback. Allowing the receiving device to feedback operational feedback enables a closed loop system comprising both devices and this makes it possible to efficiently configure the signaling such that a substantially optimal configuration is found.

In a second aspect, a power receive device is presented. The power receive device is arrangeable in a wireless power transfer system to receive power over an inductive wireless power transfer interface operating at a transmit frequency from a power transmit device. The wireless power transfer system is adapted to transfer information at half duplex using Frequency Shift Keying, FSK, in one direction and Amplitude Shift Keying, ASK, in the other direction. The power receive device comprises a receive controller operatively connected to a power receive circuitry. The power receive device is configured to cause the power receive circuitry to receive, at the transmit frequency, power from the power transmit device. The power receive device is further configured to cause the power receive circuitry to, during the receiving, transmit, at the transmit frequency, a first data packet to the power transmit device and, during the transmitting determine if a signaling condition is fulfilled. If the signaling condition is fulfilled, the power receive device is configured to change a data communication configuration of the power receive device.

In one variant of the power receive device it is further configured to perform the functionality of the power receive device as recited in the method presented above.

In a third aspect, a power transmit device is presented. The power transmit device is arrangeable in a wireless power transfer system to transmit power over an inductive wireless power transfer interface operating at a transmit frequency to a power receive device. The wireless power transfer system is adapted to transfer information at half duplex using Frequency Shift Keying, FSK, in one direction and Amplitude Shift Keying, ASK, in the other direction. The power transmit device comprises a transmit controller operatively connected to a power transmit circuitry. The power transmit device is configured to cause the power transmit circuitry to transmit, at the transmit frequency, power to the power receive device. The power transmit device is further configured to cause the power transmit circuitry to, during the transmitting of power, transmit, at the transmit frequency, a first data packet to the power receive device and, during the transmitting of the first data packet determine if a signaling condition is fulfilled. If the signaling condition is fulfilled, the power transmit device is configured to change a data communication configuration of the power transmit device.

In one variant of the power transmit device it is further configured to perform the functionality of the power transmit device as recited in the method presented above.

In a fourth aspect, a test system comprising a probe device and an analyzer device is presented. The probe device is arrangeable in a wireless power transfer system that comprises a power transmit device arranged to transfer power over an inductive wireless power transfer interface operating at a transmit frequency to a power receive device. The wireless power transfer system is of a type which is adapted to transfer information at half duplex using Frequency Shift Keying, FSK, in one direction and Amplitude Shift Keying, ASK, in the other direction. The probe device comprises at least one pickup coil and the probe device further comprises or is operatively connected to said probe analyzer device. The analyzer device is configured to detect a transferring, at the transmit frequency by the power transmit device, of power to the power receive device. The analyzer device is further configured to, during the transferring, detect a transmitting, at the transmit frequency by one of the power transmit device or the power receive device, of a first data packet to the other of the power transmit device or the power receive device using one of two modulation types being FSK or ASK. The analyzer device is further configured to detect a change in a data communication configuration by the device transmitting the first data packet, and provide information regarding the detections as output.

In one variant of the test system, it is further configured to determine, prior to detecting the change in data communication configuration, whether a signaling condition is fulfilled. The signaling condition being fulfilled is one of the following
- a modulation accuracy of a signal comprising the first data packet being lower than a modulation accuracy threshold,
- operational feedback having been provided to the device
- transmitting the first data packet by the device receiving the first data packet.

In another variant of the test system, it is further configured to detect if the configuration is changed without the signaling condition being fulfilled and to generate an output to that respect.

In a further variant of the test system, the analyzer device further comprises a generator configurable, by the analyzer device, to inject signals into the inductive wireless power transfer interface such that the signaling condition is fulfilled.

In yet another variant of the test system (132), the analyzer device is further configured to detect any of the data configuration changes mentioned in the method above.

### BRIEF DESCRIPTION OF THE DRAWINGS

Embodiments to understand the invention will be described in the following; references being made to the appended diagrammatical drawings which illustrate non-limiting examples of how aspects of the inventive concept can be reduced into practice.
Fig. 1 is a block diagram of a wireless power transfer system according to some embodiments.
Figs. 2a-c are plots of different transmit signals.
Fig. 3 is a simplified flow-chart of a process for wireless power transfer.
Figs. 4a-b are plots of different transmit signals.
Fig. 5 is a block diagram of a power receive device according to some embodiments.
Fig. 6 is a block diagram of a power transmit device according to some embodiments.
Fig. 7a-b are simplified schematics of load circuitries according to some embodiments.
Figs. 8a-b are simplified schematics of loads circuitries according to some embodiments.
Fig. 9 is a plot of a transmit signal according to some embodiments.
Figs. 10a-b are simplified plots of signal amplitude versus frequency according to some embodiments.
Fig. 11 is a simplified flow-chart of a method for transferring data during power transfer in a wireless power transfer system according to some embodiments.
Fig. 12 is a simplified flow chart of a method for determining if a signal condition is fulfilled according to some embodiments.
Fig. 13 is a simplified flow-chart of a method for transferring data during power transfer in a wireless power transfer system according to some embodiments.
Fig. 14 is a block diagram of a test system and a wireless power transfer system according to some embodiments.
Fig. 15 is a block diagram of a test system according to some embodiments.
Fig. 16 is a block diagram of a test system according to some embodiments.

### DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

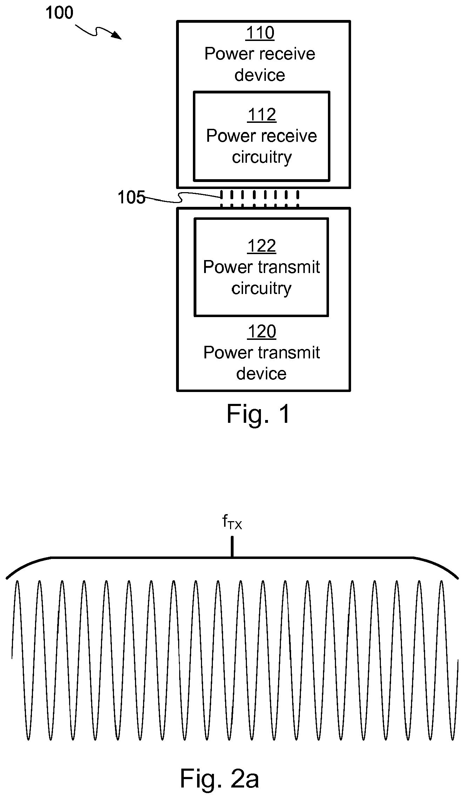

With reference to Fig. 1, a schematic view of a wireless power transfer system 100 is shown. The system comprises a power receive device 110 and a power transmit deice 120. The power transmit device 120 is arranged to transfer power to the power receive device 110. The power is transferred by inductive coupling over an inductive wireless power transfer interface 105. The inductive coupling is achieved through coupling a power transmit circuitry 122 comprised in the power transmit device 120 and a power receive circuitry 112 comprised in the power receive device 110. The inductive wireless power transfer interface 105 is typically an air interface and the inductive coupling between the devices 110, 120 is coreless.

In order for power to be transferred over the wireless inductive wireless transfer interface 105, the power transmit circuitry 122 will have to induce a receive current I_{RX} in the power receive coil circuitry 112. A transmit current I_{TX} alternating with a transmit frequency f_{TX} will generate an electromagnetic field that propagates over the wireless inductive wireless transfer interface 105 to the power receive circuitry 112. This electromagnetic field will induce the receive current I_{RX} in the power receive circuitry 112. The receive current I_{RX} will be an alternating current, alternating with the transmit frequency f_{TX.} The actual power transferred will depend on, among other things, the coupling factor between the power transmit coil 127 and the power receive circuitry 112. Thus coupling is affected by factors such as the number of turns of coils comprised in the power receive and transmit circuitry respectively, the alignment of these coils and the distance between them. The transmit frequency f_{TX} may affect the efficiency of the system, a too low frequency may cause one of the circuitries 112, 122 to saturate and a too high frequency would reduce efficiency by unnecessary switching.

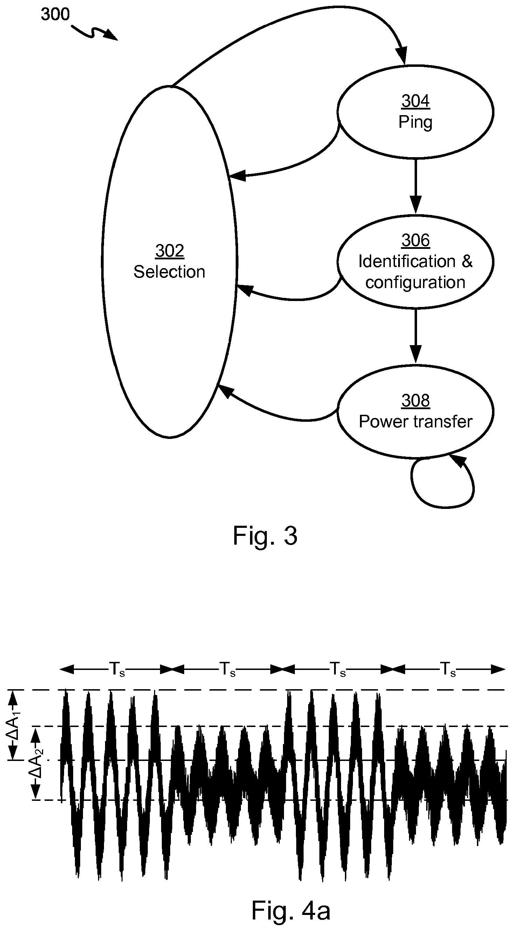

Any wireless power transfer system in general, and the wireless power transfer system 100 of Fig. 1 in particular, will require some kind of communication between the devices 110, 120. If no communication was present in e.g. a wireless charging scenario, the power transmit device 120 would have no way of knowing how much power to transfer to the power receive device 110 but would have to target the same transfer power for all power receive devices 110. The power receive device 110 would have to handle whatever power was induced in its power receive circuitry 112 and power may have to be dissipated in a dummy load if the power received was too high. These problems are addressed in the Qi standard from the Wireless Power Consortium by the introduction of an information interface that will be briefly discussed with reference to Fig. 3 in the coming sections.

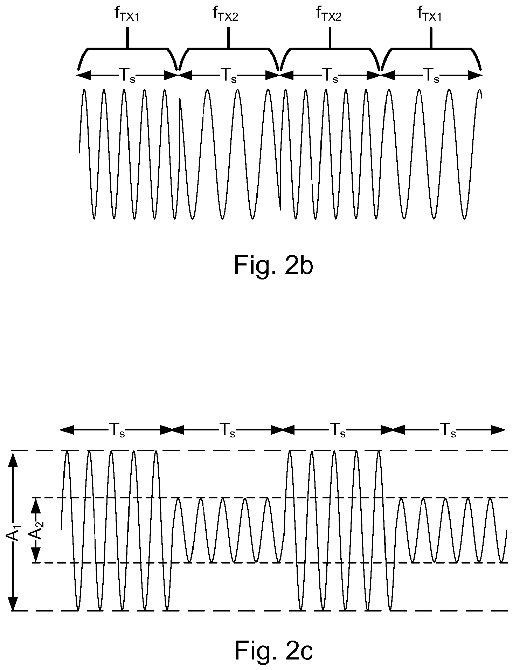

One way of communicating data between the transmit device 120 to the receive device 110 is to change the transmit frequency f_{TX} of the power transmit device 120. Fig. 2a shows a transmit signal provided to the transmit circuitry 122 that oscillates at a single transmit frequency f_{TX}. In Fig. 2b, the transmit frequency f_{TX} changes periodically between a first transmit frequency f_{TX1} and a second transmit frequency f_{TX2}. The time between each change can be described as a symbol time T_{S}. This change in transmit frequency f_{TX} is detectable by the power receive device 110. The absolute difference between the first transmit frequency frxi and the second transmit frequency f_{TX2} is called the frequency deviation f_{dev} and may be referred to as the modulation depth. This type of modulation is known in the art as Frequency Shift Keying, FSK, and the particular example of Fig. 2b with two different values of the transmit frequency is typically called Binary Frequency Shift Keying, BFSK.

Another way of communicating data between the devices 120, 110 is to change the amplitude of the transmit signal periodically. This is shown in Fig. 2c where the amplitude of the transmit signal is changed with the symbol time T_{S}. The amplitude is changed between a first amplitude A₁ and a second amplitude A₂. The absolute difference between the first amplitude A₁ and the second amplitude A₂ is called the amplitude deviation A_{dev} and may be referred to as the modulation depth. The change in amplitude is easily detectable by either of the devices 110, 120. Since the transmit circuitry 122 is inductively coupled to the receive circuitry 112, any change in the power receive circuitry 112 of the power receive device 110 will be detectable by the power transmit device 120. Simply put, this means that the power receive device 110 may change or modify its receive circuitry 112 and this would be seen as a change in amplitude of the transmit signal at the transmit circuitry 122 of the power transmit device 120. This is known as backscatter communication or ambient backscatter communication.

The change in the receive circuitry 112 may be implemented by switching or changing any suitable impedance element in the power receive circuitry 112, this will be explained in more detail in coming sections. This type of modulation is known in the art as Amplitude Shift Keying, ASK, and the particular example of Fig. 2c with two different values of the transmit frequency is typically called Binary Amplitude Shift Keying, BASK.

In true ASK, the modulation is typically achieved by purely resistive changes in the power receive circuitry 112. When reactive components are introduced in the impedance elements, phase shifts may occur during switching between amplitudes. In real applications, a purely resistive impedance element is difficult to achieve. Consequently, some shifting of the phase is expected. There may be implementations where the impedance element is mainly reactive which may be seen as a form of Phase Shift Keying, PSK.

In the Qi standard, the power transmit device 120 communicates by BFSK and the power receive device 110 by BASK.

With reference to Fig. 3, a brief introduction to the Qi power transfer process 300 will be given. This will be a non-exhaustive description and given as a general introduction only. In order to save power, the process 300 starts with the selection phase 302 wherein the power transmit device 120 typically monitors the wireless inductive power interface 105 for changes, and particularly the introduction of a power receive device 110. When an object is detected in the wireless inductive power interface 105, the ping phase 304 is initiated. In the ping phase 304, the power transmit device 120 executes a digital ping by the power transmit device 120 providing a transmit signal of the transmit frequency f_{TX} to the transmit coil 127. If a modulation is detected on the transmit signal within a predefined time period, the process 300 moves on to a identification & configuration phase 306. If no modulation is detected, the process 300 reverts back to the selection phase 302. In the identification & configuration phase 306, the power transmit device 120 identifies the power receive device 110 and obtains configuration information regarding e.g. maximum power to be transferred. The identification & configuration phase 306 may comprise a negotiation phase and a calibration phase (neither shown in Fig. 3) depending on capabilities of the power transmit device 120 and the power receive device 110. If errors should occur during the identification & configuration phase 306, the process 300 reverts back to the selection phase 302. If, on the other hand, the identification & configuration phase 306 is successful, the process 300 advances to a power transfer phase 308 wherein power is transferred and the control of the power transferred is based on control data transmitted by the power receive device 110. If the power transmitter 120 does not receive a communication from the power receive device 110 within a predetermined period of time, the power transmitter 120 will typically terminate the power transfer and revert to the selection phase 302.

The inventors of this invention have realized that the process 300 described above may be improved in many ways. It takes a fair amount of power to reach the power transfer phase 308 and the phases 302, 304, 306 leading up to this phase 308 will typically have to be repeated if something fails in the communication between the power receive device 110 and the power transmit device 120. Also, there is no way for the power transmit device 120 to initiate communication with the power receive device 110 when operating in the power transfer phase 308 if something unexpected happens.

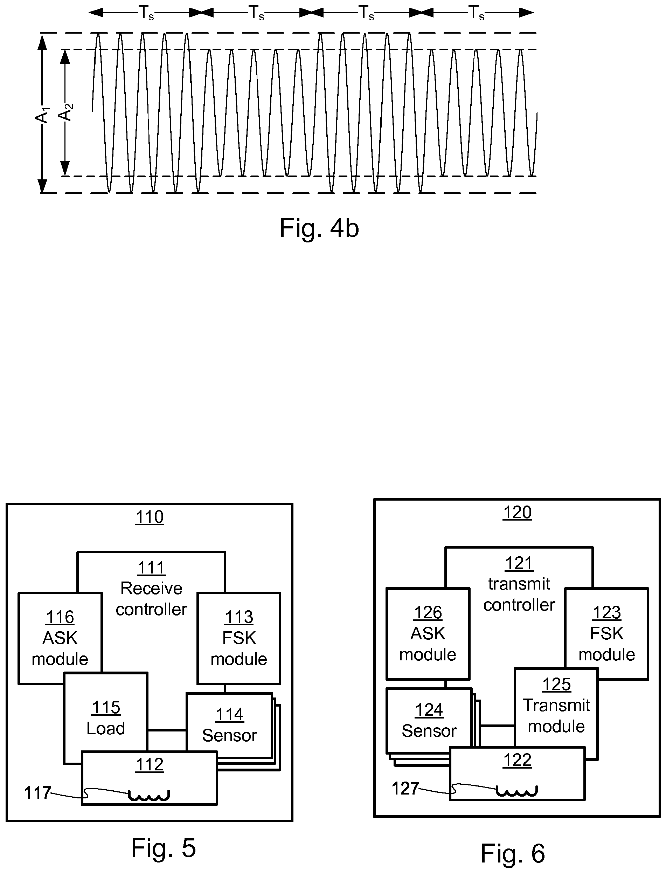

As mentioned above with reference to Fig. 3 and the power transfer process 300, if the power transmitter 120 does not receive a communication from the power receive device 110 within a predetermined period of time, the power transmitter 120 will typically terminate the power transfer and revert to the selection phase 302. The probability of the power transmit device correctly decoding a received ASK symbol will depend on the modulation depth and any noise comprised in the signal comprising the ASK modulated signal. The relationship is commonly referred to as Signal to Noise Ratio, SNR, and is a common metric in communications. The SNR can, in simplified wording, be described as the useful part of a received signal divided by the noise of the received signal. If the SNR should decrease, the probability of a receiver correctly decoding the modulated signal will also decrease. In Fig. 4a, the signal of Fig. 2c has been subjected to a random noise and as seen a spread in the first amplitude ΔA₁ is overlapping the corresponding spread in the second amplitude ΔA₂. From the receiver perspective, it will be more difficult to correctly receive and decode the ASK modulated signal due to the difficulty in determining the amplitude deviation A_{dev}, i.e. a low SNR. In Fig. 4b, the transmit signal is depicted with an ASK modulation analogously to Fig. 2c. One difference between Fig. 4b and Fig. 2c is that the modulation depth, i.e. the absolute difference in amplitude between the first amplitude A1 and the second amplitude A2, is greatly decreased in Fig. 4b. As the modulation depth decreases, it will be increasingly difficult for the power transmit device to receive the communication from the power receive device.

There are many reasons for the ASK modulated signal to show behavior such as those in Figs. 4a and 4b or a combination of them, i.e. poor amplitude deviation A_{dev} and high noise. The noise could be any external or internal source generating a disturbance or thermal noise occurring due to heating of either the transmit device 120 or the receive device 110. The amplitude deviation A_{dev} being low may be caused by e.g. poor coupling between the power transmit circuitry 122 and the power receive circuitry 112. Any such change in the received signal can be referred to as a change in modulation accuracy.

In the power transfer system 100, there are some noteworthy characteristics that typically increases the SNR in these types of systems 100. Various parameters may be used for optimization of the power transfer, for example power level, transfer efficiency, etc. By definition, the power transfer system 100 desires to operate at an optimum operating point. However, such an optimum operating point may be defined. Since any modulation is in fact a deviation from the optimum operating point, this means that any modulation will place the system 100 in a less than optimum state during the time of modulation. Consequently, a larger modulation depth will result in, on one hand, a more reliable data transfer, but, on the other hand, result in a less optimal power transfer. Accordingly, a larger amplitude deviation A_{dev} results in a larger impact on the power transfer system 100. From this, system designers would like to minimize the SNR as much as possible by designing a system that aims to operate at its most efficient operating point. Consequently, the amplitude deviation A_{dev} will be kept as low as possible in order to maximize the power transfer but still sustain a reliable communication. This makes the data communication of the wireless power transfer system more sensitive to noise and the typical SNR of these systems is low. As was explained earlier with reference to Fig. 3, miscommunication or failure to communicate messages will result in re-iteration of the power transfer process 300.

The frequency modulation shown in e.g. Fig. 2b assumes that the power transfer system 100 has a bandwidth that at least covers the frequency deviation and that the power transferred, i.e. a power transfer loss, is substantially the same for all modulation frequencies. This is the case if the transmit frequency f_{TX} is the same as a resonance frequency of the power transfer system 100. However, this is typically not the case and also during FSK modulation, there may be unwanted shifts in amplitude. These unwanted amplitude shifts further affect the modulation accuracy and the SNR of the ASK modulation, increasing the risk of miscommunication and re-iteration of the power transfer process 300.

Fig. 5 shows a slightly more detailed schematic view of a power receive device 110. The power receive circuitry 112 comprises at least a power receive coil 117 that will enable coupling to the inductive wireless power transfer interface 105 such that a receive current I_{RX} is induced in the power receive circuitry 112. The power receive circuitry 112 will typically comprise some kind of rectifier circuitry arranged to rectify the receive current I_{RX} and the output of the rectifier may be operatively connected to a load, e.g. a charging circuitry and/or a battery. The power receive device will typically comprise a load circuitry 115 that that can be arranged to present an impedance to the power receive circuitry 112. In many cases, the load circuitry 115 is comprised in the power receive circuitry 112 or arranged between the power receive circuitry 112 and the load. The load circuitry 115 will be described in more details in coming sections. The power receive device 110 also comprises a receive controller 111 that may be configured to control at least the power transfer portion of the power receive device 110. The power receive device 111 further comprises an ASK module 116 that is configurable to ASK modulate the receive current I_{RX} of the receive circuitry 112. One or more sensors 114 are also comprised in the power receive device 110, typically these sensors are arranged in or at the power receive circuitry 112 to provide metrics e.g. voltage, current, power, frequency and/or temperature to the receive controller 111. Further to this, the power receive device 110 comprises an FSK module 113 that is configurable to detect an FSK modulated signal comprised in the receive current I_{RX} of the receive circuitry 112. Typically, the modulation modules 116, 113 will be comprised in or operatively connected to the receive controller 111. The modulation modules 116, 113 may be stand-alone hardware blocks/components or implemented in software. The ASK module 116 will be arranged to control the load circuitry 115 such that ASK modulation is achieved. The load circuitry 115 will be operatively connectable to the receive circuitry 112 and may be comprised in the receive circuitry 112 before or after, seen from the power receive coil 117, the rectifying circuitry of the power receive circuitry. Similarly, the FSK module 113 will be operatively connected to a frequency sensor that may be one of said one or more sensors 114 or a separate sensor that may be implemented in software configured to detect a frequency content of a digital representation of the receive current I_{RX} and/or an associated receive voltage V_{RX}. The actual internal arrangement of the power receive device 110 may be varied in any number of ways and the skilled person will understand that the particular composition and interconnections will be adapted depending on the situation.

The power transmit device 120 is schematically shown in Fig. 6. The power transmit device 120 comprises the power transmit circuitry 122 and a transmit controller 121 operatively connected to the power transmit circuitry 122. The transmit circuitry 122 comprises at least one power transmit coil 127 that will inductively couple to the power receive coil 117 of the power receive device 110. The transmit controller 121 is configured to control the excitation of the power transmit circuitry 122 and control the power delivered to the power receive device 110 via the inductive wireless power transfer interface 105. In order to achieve this, the power transmit device 120 comprises a transmit module 125 that is operatively connected to or comprised in the transmit controller 121. The transmit module 125 generates the transmit signal at the transmit frequency f_{TX} and will change the transmit signal based on instructions received from the transmit controller and/or an FSK module comprised in the power receive device. An FSK module 123 controls the FSK modulation of the transmit module 125 and may be a stand-alone block/component or comprised in the transmit module 125 or the transmit controller. The power transmit device 121 will comprise one or more sensors 124, typically these sensors 124 are arranged in or at the power transmit circuitry 122 to provide metrics e.g. voltage, current, power, frequency and/or temperature to the transmit controller 121. The power transfer module further comprises an ASK module 122 operatively connected to receive ASK modulation from the transmit current I_{TX} and/or an associated transmit voltage V_{TX} in the transmit circuitry. Alternatively or additionally, the ASK module 122 may be configured to detect ASK modulation on a digital representation of the transmit signal. The actual internal arrangement of the power transmit device 120 may be varied in any number of ways and the skilled person will understand that the particular composition and interconnections will be adapted depending on the situation.

The modules 116, 113, 114, 122, 123, 124, and controllers 111, 121 introduced with reference to Figs. 5 and 6 in the previous sections may be software or hardware modules or a combination of software and hardware. The functionality of the modules 116, 113, 114, 115, 122, 123, 124, 125 is described as isolated modules but this is for explanatory reasons only, each module may be distributed among or included in any the other modules.

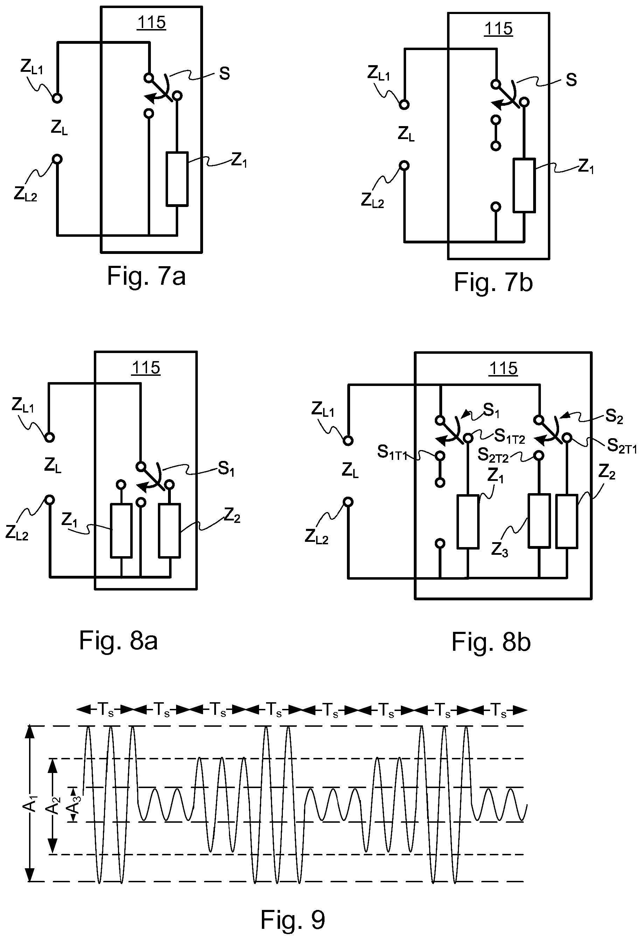

In Fig. 7a, one example of a block diagram of the load circuitry 115 is shown. This example of the load circuitry is intended to operatively connect in series between the power receive circuitry 112 and the load. In Fig. 7b, a corresponding example of a block diagram of the load circuitry 115 intended for parallel connection between the power receive circuitry 112 and the load is shown. The load circuitry 115 can be described as presenting a load impedance Z_{L} to the power receive circuitry 112. The load circuitry 115 may be connected in any suitable way to the power receive circuitry 112 and may be comprised in the power receive circuitry 112. As seen when comparing Figs. 7a and 7b, there may be differences in the design of the load circuitry 115 is it is intended for serial or parallel connection. The following examples are for illustrative purposes only and should not be considered as limiting the implementation of the load circuitry 115, the power receive circuitry 112 or the power receive device 110. The load impedance Z_{L} is typically provided as the impedance between a first load impedance port Z_{L1} and a second load impedance port Z_{L2}. The load impedance Z_{L} is, in Figs. 7a and 7b, changed by connecting or disconnecting a first impedance element Z₁ from the load impedance ports Z_{L1}, Z_{L2}. This change is controlled by a switching element S that is typically controlled by the receive controller 111 and/or the ASK module 116. In Fig. 7a, the switch S is shown as switchable between two positions, one position where the load impedance ports Z_{L1}, Z_{L2} are essentially short circuit and another position where a first impedance Z₁ is connected across the load impedance ports Z_{L1}, Z_{L2}. In Fig. 7b, the switch S is shown as switchable between two positions, one position where the load impedance ports Z_{L1}, Z_{L2} are essentially open circuited and another position where a first impedance Z₁ is connected across the load impedance ports Z_{L1}, Z_{L2}. As mentioned earlier, by toggling the switch S, the load impedance Z_{L} presented to the power receive circuitry 112 will change and consequently the amplitude of the transmit signal will change, as described earlier with reference to Fig. 2c. Note that the load circuitry 115 presented in Fig. 7 is suitable for operating in series with the power receive circuitry 112, an example suitable for parallel operation may have one positon of the switch arranged to provide an essentially infinite impedance to the load impedance ports Z_{L1}, ZL2.

The implementation of the load circuitry 115 as presented above with reference to Fig. 7 may give rise to the issues introduced with reference to Fig. 4a and 4b, resulting in the power transfer process 300 having to revert to the selection phase 302 and repeating the initiating phases 304, 306. The inventors have realized that by making it possible to provide more than two load impedances Z_{L} from the load circuitry 115, it is possible to improve the modulation accuracy. In this, it will not only be possible to improve the modulation accuracy but also to increase the bitrate allowing higher order modulation.

With reference to Fig. 8a, one example of an implementation of a load circuitry 115 enabling more than two load impedances Z_{L} to be presented to e.g. the power receive circuitry 112. By having three or more throws to a first switch S₁ comprised in the load circuitry 115, it is possible to present, in this example, either the first impedance Z₁, a second impedance Z₂ or a short circuit, visualized as a line without any component in Fig. 8a, across the load impedance ports Z_{L1}, Z_{L2}. By adding a second switch S₂, as seen in Fig. 8b, the component cost will increase but even more impedances can be presented across the load impedance ports Z_{L1}, Z_{L2}. In Fig. 8b, the first switch S₁ is switchable between a first switch first throw S_{1T1} and a first switch second throw S_{1T2}, correspondingly the second switch S₂ is switchable between a second switch first throw S_{2T1} and a second switch second throw S_{2T2}. This means that the first switch S₁ either disconnects the impedance ports Z_{L1}, Z_{L2}, connected to the first switch first throw S_{1T1}, or connects the first impedance element Z₁ across the impedance ports Z_{L1}, Z_{L2}, connected to the first switch second throw S_{1T2}. The second switch S₂ connects either the second impedance element Z₂, connected to the second switch first throw S_{2T1}, or a third impedance element Z₃, connected to the second switch second throw S_{2T2}, across the impedance ports Z_{L1}, Z_{L2}, parallel to the impedance connected by the first switch S₁. From the circuitry shown in Fig. 8b a number of different values for the load impedance Z_{L} can be realized, the impedances are summarized in Table 1 below.

**Table 1**

| **Positon S₁** | **Position S₂** | **Z_{L}** |
|---|---|---|
| S_{1T1} | S_{2T1} | Z₂ |
| S_{1T1} | S_{2T2} | Z₃ |
| S_{1T2} | S_{2T1} | Z₁ ∥ Z₂ |
| S_{1T2} | S_{2T2} | Z₁ ∥ Z₃ |

Note that the impedances Z₁, Z₂, Z₃, Z_{L} and the lines representing short circuits in Figs. 7 to 8b are all examples of impedances. The lines representing short circuits may be illustrated with impedance elements and realized with 0 Ω resistors. The impedance elements Z₁, Z₂, Z₃ will typically be realized by elements being primarily resistive but impedance elements being primarily reactive may also be used. The skilled person will understand this and be able to adjust the teachings of this disclosure accordingly should the type of impedance element be changed. As understood after digesting the information in this disclosure, it is most likely that one setting of the load impedance Z_{L} will correspond to no impedance being connected across the impedance ports Z_{L1}, Z_{L2}, this is to maximize the power transferred.

Fig. 9 illustrates one example of a transmit signal utilizing the first amplitude A₁, the second amplitude A₂ and introducing the third amplitude A₃. The transmit signal of Fig. 9 can be provided by either of the load circuitries 115 of Fig. 8a or 8b and each amplitude A₁, A₂, A₃ will correspond to an associated value of the load impedance Z_{L}. Assuming that the duration of the transmit signal shown in Fig. 9 is the same as the duration of the transmit signal shown in e.g. Fig. 2c, the time per symbol Tₛ will, in Fig. 9, be half the time per symbol compared to that of Fig. 2c. This means that the symbol rate would double and it will be possible to transfer data faster. Alternatively, the additional amplitude state can be used to ensure good modulation accuracy and reliable SNR without compromising the power transfer efficiency. Yet another possibility is to use the additional amplitude state to encode information in the transmit signal that would not be decoded by a device 110, 120 not knowing that a higher modulation order is used. Hence this allows a method of transferring a hidden message across the channel that will be ignored by normal devices or error correction mechanisms will filter out the hidden message. This mechanism may be used for e.g. authentication or copy-right protection purposes.

Either of the ASK modules 116, 126, the load circuitry 115, the power receive circuitry 112 or the power transmit circuitry can comprise circuitry, sensors and/or controller(s) to evaluate the amplitude of the transmit signal. This evaluation can be made by either of the power transmit device 120 or the power receive device. If the device performing the amplitude modulation, typically the power receive device, simultaneously with transmission of ASK data, evaluates the amplitude of the transmit signal it can change the load used for modulation of the different ASK amplitudes. As a non-limiting illustrating example, assume the load circuitry 115 of Fig. 8b and that ASK modulation is to be performed with a first amplitude A₁ and a second amplitude A₂ only. The first amplitude A₁ is the load impedance Z_{L} corresponding to Z₂ and the second amplitude A₂ is the load impedance Z_{L} corresponding to Z₃, i.e. only the second switch in Fig. 8b is switching and the first switch S₁ is connecting the first switch first throw S_{1T1}. If a certain amplitude deviation A_{dev} is expected and the amplitude deviation A_{dev} is below this, there is a risk of miscommunication or lost data resulting in re-iteration of the power transfer process 300. Also, if the amplitude deviation A_{dev} is too high, power is wasted since a lower amplitude means less power transferred. In either case, the positions of the switches S₁, S₂ corresponding to either amplitude A₁, A₂ can be adjusted such that the evaluated deviation is close to the expected amplitude deviation A_{dev}. Generally, but not necessarily, the settings of the switches S₁, S₂ should be adjusted such that the power transfer efficiency is maximized. This means that if the amplitude deviation A_{dev} should be decreased, the switch setting corresponding to the lowest amplitude in the transmit signal should be adjusted such that the amplitude of the transmit signal in a low state is increased. Analogously, if the amplitude deviation A_{dev} should be increased, the switch setting corresponding to the highest amplitude in the transmit signal should be adjusted such that the amplitude of the transmit signal in this state is increased. The changes mentioned above are examples, if it desired to increase the amplitude of a high state of the transmit signal in order to increase amplitude deviation A_{dev} but no load impedance Z_{L} is available to achieve this, the load impedance Z_{L} corresponding to the low state should be changed.

In a similar manner as described above regarding the changing of the load impedance ZL used for the ASK modulation, the frequency used for the FSK can be changed. The change in frequency, i.e. the frequency deviation f_{dev}, is typically controlled by changing a control to a Voltage Control Oscillator, VCO, or corresponding circuitry. Such circuitry for generating the FSK modulation will typically be comprised in e.g. the FSK module 123, in the transmit module 125. The detection of the FSK modulation can be done both at the device 110, 120 performing the FSK modulation and at the device 120, 110 receiving the FSK modulated signal. The detection of the frequency deviation f_{dev} can be accomplished in a vast number of ways with varying accuracy, complexity and cost. The skilled person will understand, depending on e.g. particular design requirements, what solution to choose when detecting the FSK modulation.

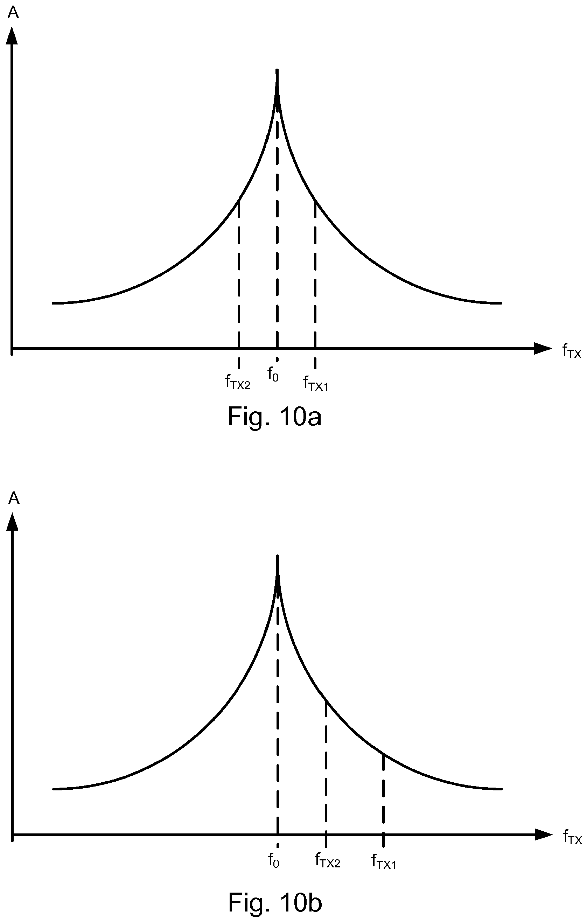

Also the frequency deviation f_{dev} will affect the efficiency of the power transfer and especially if the transmit frequency f_{TX} is altered. In Fig. 10a, an exemplary plot of an amplitude A versus the transmit frequency f_{TX} for the transmit signal is shown. As seen, the amplitude A has a maximum value at what is called the resonance frequency f₀. The resonance frequency f₀ is the frequency at which the power transfer is the most efficient. This is due to the reactive components comprised in an impedance of the power transfer being minimized; ideally the impedance of the power transfer is purely resistive. In Fig. 10a, the first transmit frequency f_{TX1} and the second transmit frequency f_{TX2} are shown essentially equally distanced above and below the resonance frequency f₀, respectively. This configuration could be the configuration that will result in the most efficient power transfer during the transmission of FSK modulated data. In Fig. 10b, the transmit frequencies f_{TX1}, f_{TX2} are shifted above the resonance frequency f₀. This results in a reduced average amplitude A and consequently reduced efficiency of the power transfer.

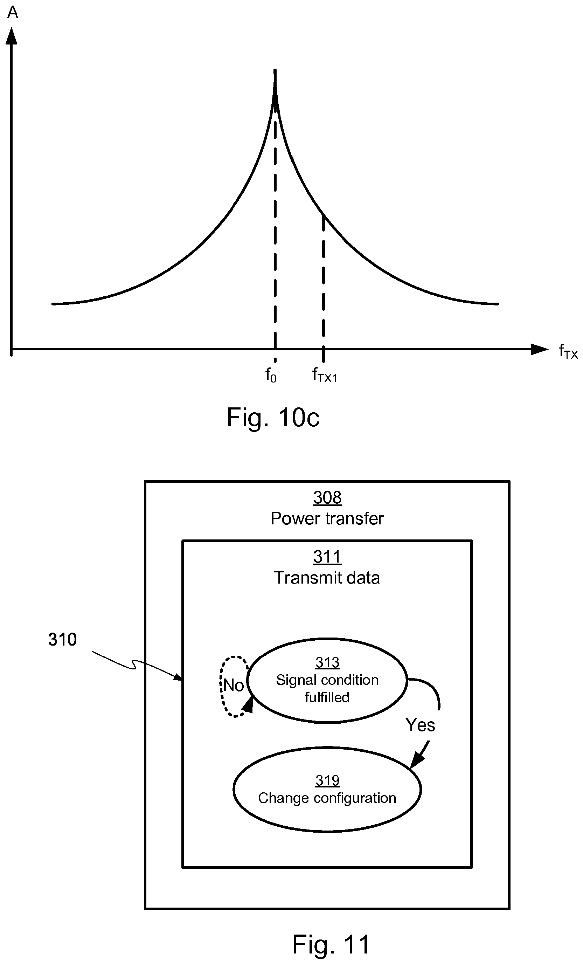

By evaluating the amplitude of the transmit signal as described earlier, it can be determined if the transmit frequency f_{TX} should be shifted up or down in frequency in order to be centered around the resonance frequency f₀. If the lower frequency of the transmit frequencies f_{TX1}, f_{TX2} is lower in amplitude that the higher of the transmit frequencies f_{TX1}, f_{TX2}, the transmit frequency f_{TX} should be shifted up in frequency. From this follows that if the lower frequency of the transmit frequencies f_{TX1}, f_{TX2} is higher in amplitude than the higher of the transmit frequencies f_{TX1}, f_{TX2}, the transmit frequency f_{TX} should be shifted down in frequency. Turning to Fig. 10c, a specific example relating to the Qi standard will be detailed. In the Qi standard there is an operating frequency, analogue to the transmit frequency f_{TX} of this disclosure, and modulated frequency, analogue to the first or second transmit frequencies f_{TX1}, f_{TX2}. Since the system spends most time on the operating frequency f_{TX} this one would, as shown in Fig. 10c, typically be optimized and the modulated frequency f_{TX1} slightly shifted. As explained in previous sections, the difference between the operating frequency, i.e. the transmit frequency f_{TX1}, and the modulated frequency, i.e. the first transmit frequency in Fig. 10c, should be sufficient to have reliable modulation depth, but not too much to impact power transfer.

Apart from being able to optimize the power transfer during data transfer or increasing the bitrate by adding further modulation states with any number of transmit frequencies f_{TXn} or modulation amplitudes Aₙ, these additional modulation states can be used to transmit additional information without violating a standardized communication of the wireless power transfer system 100. The standardized communication will specify amplitude deviation A_{dev} and frequency deviation f_{dev} with tolerances. By having more modulation states and being in control of the modulation, the additional modulation states can be placed such that the standardized communication will still detect a standardized message but the modulation states are such that an additional message is transmitted at the same time in parallel with the standardized message. In one embodiment, the additional modulation states will be selected depending on the tolerances of the standardized communication regarding the deviations A_{dev}, f_{dev}. There are embodiments wherein the standardized communication is such that it looks to e.g. an average modulation state over the symbol time Tₛ in determining the modulation state, and in such communication types, the additional modulation states will be selected such that the average value over the symbol time Tₛ complies with the standardized communication. In another embodiment the standardized communication only looks to the modulation state at a segment of the symbol time Tₛ. In this embodiment the additional modulation states are utilizing times before and/or after the segment of the symbol time Tₛ.

With reference to Fig. 11, a method 310 for transferring data during the power transfer process 308 will be detailed. In short, the method 310 will enable a change in a data communication configuration if a signaling condition is fulfilled. The method 310 is preferably executed during the power transfer process 308 of the wireless charging process 300 presented with reference to Fig. 3. However, the skilled person understands that the concept is applicable to at least any system utilizing inductive transfer of energy.

During the power transfer process 308, either the power receive device 110 or the power transmit device 120 transmits 311 data to the other device 120, 110. Generally, in the Qi standard, it is the power receive device 110 that transmits 311 data to the power transmit device 120 but the method 310 is not limited to this direction of information. The data is typically comprised in a first data packet and this first data packet is transmitted 311 either with FSK or ASK modulation. Typically, the transmitting 311 will be conducted using FSK if the power transmit device 120 transmits 311 the first data packet and using ASK if the power receive device 110 transmits 311 the first data packet.

During the transmission 311 of the first data packet, the device 110, 120 transmitting the first data packet determines 313 is a signaling condition is fulfilled. The signaling condition can be any number of conditions relating directly or indirectly to the transmission 311 of the first data packet. The check 313 to see if a signal condition is fulfilled can be run several times during the transmitting 311 of the first data packet or just once during the transmitting 311 of the first data packet.

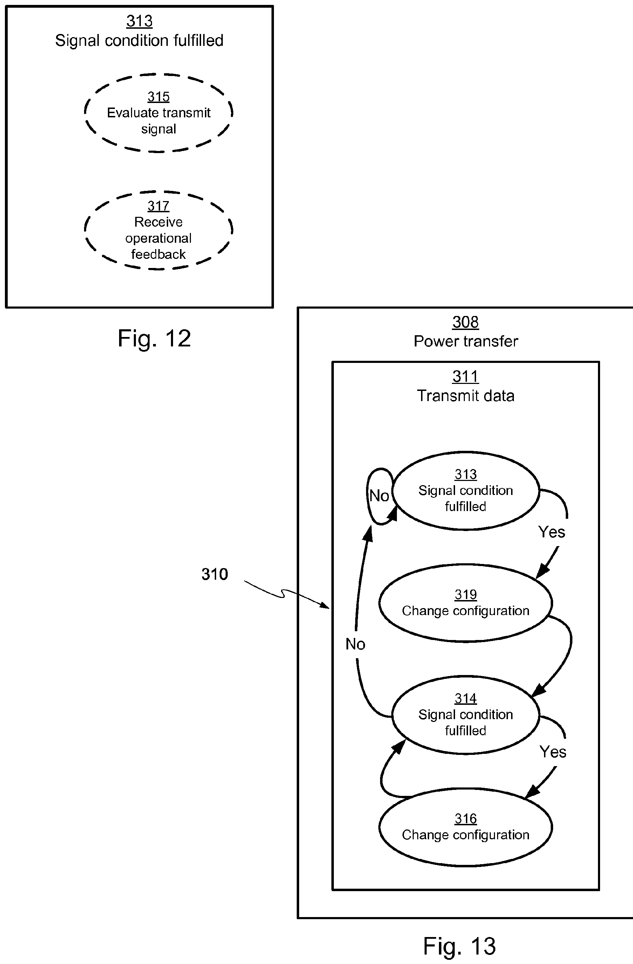

The step of determining 313 if a signaling condition is fulfilled will be further detailed and exemplified with reference to Fig. 12. The signal condition can be any condition relating to the signal comprising the first data packet, e.g. modulation parameters, SNR, amplitudes etc. Consequently, the step of determining 313 if the signaling condition is fulfilled may comprise evaluating 315 the transmit signal. The transmit signal may be evaluated with regards to one or more metrics relating to the quality of the transmit signal. It may be related to changes in the transmit signal or absolute changes of metrics related to the transmit signal. Such changes and/or metrics may be represented in a Signal Quality Indicator, SQI. The SQI may comprise changes in modulation accuracy metrics as described with reference to Figs. 4a-b, a change in frequency deviation, or a change in symbol time T_{S}, T_{Fs}, T_{As}. Changes in symbol time T_{S}, T_{Fs}, T_{As} can be seen as changes in a symbol rate, i.e. a bit rate or a modulation speed. The SQI may comprise any metric having to do with signal quality and is not limited to modulation accuracy. One signaling condition can be described as fulfilled when the SQI is below an SQI threshold. As presented in Fig. 10b, one signaling condition can be that there is an amplitude deviation A_{dev} in an FSK signal. One signaling condition can be that the amplitude deviation A_{dev} is above or below an amplitude threshold value. One signaling condition can be the SNR being above or below a SNR threshold value. From the non-exhaustive examples of signaling conditions presented above it can be seen that many of them relate to the amplitude of the transmit signal and consequently it is beneficial to evaluate 315 the amplitude of the transmit signal when determining 313 if the signal condition is fulfilled.

With continued reference to Fig, 12 and still relating to the step of determining 313 if a signaling condition is fulfilled, one optional feature will be described. Additionally, or alternatively, the signaling condition can be determined 313 to be fulfilled if operational feedback is received 317 during the transmission 311 of the first data packet. The operational feedback may be comprised in a second data packet. The operational feedback can comprise any of the operational parameters mentioned earlier or can be related to feedback provided by a user of the system 100. In one embodiment the operational feedback is received 317 from the device 120, 110 receiving the first packet. This is possible since the first data packet is transmitted using either of ASK or FSK, and the operational feedback may be given by transmitting operational information using the other of ASK or FSK. By configuring the device 110, 120 transmitting 311 the first data packet to detect operational information sent during the transmission 311 of the first data packet, it is possible for the device 120, 110 receiving the first data packet to communicate operational feedback during its reception 311 of the first data packet. If the receiving device 120, 110 detect problems or opportunities in the transmission 311 of the first packet, the device 120, 110 can inform the transmitting device 110, 120 of this and the transmitting device 110, 120 can update its data communication configuration with respect to the problem or opportunity. The problems mentioned can be any of the signaling conditions mentioned earlier, for instance a determined SQI being below the SQI threshold.

More generally, the receiving device 120, 110 (i.e. the device 110, 120 not transmitting the first data packet), may evaluate a signal quality of the signal comprising the first packet. If the evaluated quality of the signal comprising the first packet fails to meet a threshold signal quality, the receiving device 120, 110 may transmit operational information at the transmit frequency f_{TX} using the other of said one of two modulation types being FSK or ASK, thereby providing said operational feedback. Data related to or representing the evaluated quality, for instance in the form of an SQI, may be included in the transmitted operational information.

Returning again to Fig. 11, if the signaling condition is determined 313 to be fulfilled, the device 110, 120 transmitting the first data packet will change 319 a data communication configuration. The change 319 in configuration is typically related to the signaling condition determined 313 to be fulfilled and the configuration changed is hence a configuration relating to data communication. The term data communication configuration is meant to comprise all types of configurations and settings pertaining to communication of data in general, and to the transmission 311 of the first data packet in particular. The change 319 in configuration can be a change in a single configuration parameter or in a number of configuration parameters. The configuration parameter(s) to change 319 can be predefined or configurable configuration parameter(s). The configuration parameter(s) may be configuration parameter(s) relating to the modulation of the transmit signal, i.e. the signal comprising the first packet. The configuration parameter(s) may alternatively or additionally comprise configurations relating to the structure or configuration of data packets. In one embodiment, the configuration parameters are such that the transmission 311 of the first data packet is restarted. In one embodiment, the change 319 in configuration is a change in any one of a predefined or configurable set of modulation parameters. Modulation parameters in the context of changing 319 configuration comprises modulation index, symbol rate Tₛ, bits per symbol, deviation A_{dev}, f_{dev}, transmit frequency f_{TX} etc. The change 319 in configuration may be achieved in any suitable way and particularly in the ways presented earlier. As a non-limiting example, a change in amplitude deviation A_{dev} may be accomplished by means of the load circuitries 115 presented earlier with reference to Figs. 8a-b. An additional non-limiting example of change in configuration could be accomplished by shifting an operating point of the system 100. Operating points may comprise a target voltage and/or a target current and/or a load resistance on the receive device 110 and/or a voltage and/or a current of the power transmit coil 123 and/or an operating frequency on the transmit device 120.

The step of determining 313 if a signaling condition is fulfilled and changing 319 configurations can be associated with one another in the sense that the signal condition being fulfilled will determine what configuration to change. From the previous sections of this disclosure, the skilled person will have learned and understood numerous of such associations and will understand that all are applicable when performing the method 310. Further to this, the signaling condition may also be used by the transmit device 120 to optimize a communication channel in the case of a multi-device charging environment. In such environments, there may be multiple power receive devices 110 operating on the same transmit signal provided by one power transmit device 120. The optimum configuration for the power transmit device 120 may not be the same as the optimum configuration for any individual power receive devices 110.

As mentioned, there are many different modulation parameters that can be changed 319. There are embodiments where a particular signaling condition mandates a particular change 319 but it may be that the change 319 will not affect the signal condition sufficiently and/or correctly. In such cases an embodiment, see Fig. 13, with a set of modulation parameters may be implemented where the set of modulation parameters are iteratively changed 319. The embodiment visualized through Fig. 13 adds a further step of determining 314 if the signaling condition is fulfilled following the step of changing 319 configurations. If the signaling condition is still determined 314 to be fulfilled, or if another signaling condition is determined 314 to be fulfilled, the configuration is changed 316 once more. This additional change 316 is repeated until no signaling condition is determined 314 to be fulfilled. The additional change 316 can, in one embodiment, iterate the set of modulation parameters repeatedly. The additional change 316 can, in another embodiment, evaluate suitable parameters such as modulation accuracy and/or power transferred for each of the parameters in the set of modulation parameters. If a signal condition is fulfilled for all parameters in the set of modulation parameters, the parameter resulting in the most suitable modulation accuracy and/or power transfer is selected.

The skilled person understands that the change in configuration may comprise changing more than one configuration and that the set of modulation parameters can result in several combinations of modulation parameters and that iterating this set can include all or some of these combinations.

Since the steps described in the method 310 of Figs. 11-13 still comply with e.g. the Qi specification, it is something that can be implemented seamlessly and the added functionality will have no effect on legacy systems.

The power receive device 110 and the power transmit device 120 exemplified with reference to Figs. 5 and 6 are both capable of performing the method 310 described above. Either device 110, 120 may be configured to transmit or receive the first package.

Typically, in the Qi specification, the power receive device 120 will be the device transmitting the first package. This is the communication associated with the power transfer phase 308 of the power transfer process 300 described in Fig. 3. The first package would, in such an embodiment, be the control data transmitted by the power receive device 110. If the first package comprising the control data would suffer from e.g. poor modulation accuracy and/or SQI, the method 310 described with reference to Figs. 11-13 would enable the power receive device 110 to detect this as the signaling condition and change 319 its configuration to mitigate problems or utilize opportunities. The power receive device 110 could perform e.g. necessary adjustments to its ASK module 116 such that the modulation accuracy and/or SQI is improved. As a result, the power transfer phase 308 can commence without having to revert to the selection phase 302, thereby avoiding a re-iteration of the power transfer process 300.

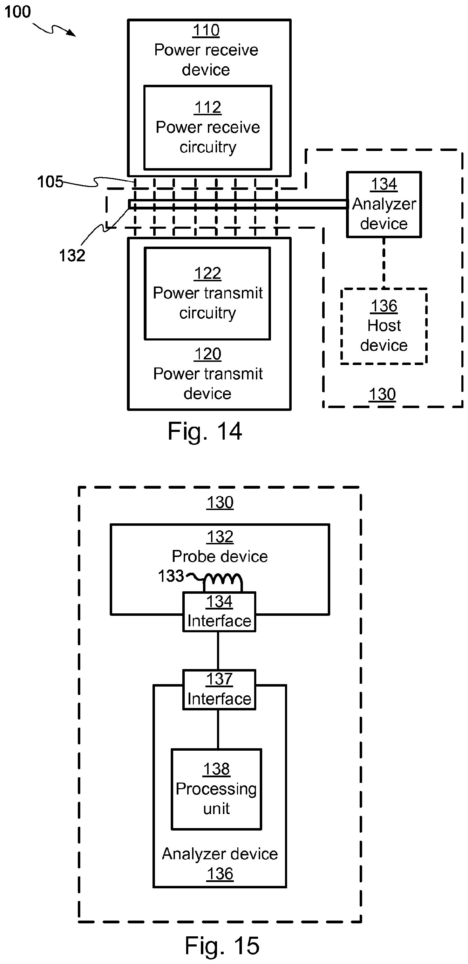

The process 310 described with reference to Figs. 11-13 can be verified, certified, trimmed and/or calibrated using a probe device 132. With reference to Fig. 14, a test system 130 will be introduced. The test system 130 comprises the probe device 132, an analyzer device 134 and an optional host interface 136. The probe device 132 is arrangeable in the wireless power transfer system 100 such that it can sniff the electromagnetic field of the inductive wireless power transfer interface 105. The probe device 132 either comprises or is operatively connected to the analyzer device 134. The analyzer device 134 may be in communication with the host device 136.

Turning to Fig. 15, a block diagram of the test system 130 is shown, depicting the probe device 132 and the associated analyzer device 134 in more detail. The probe device 132 comprises a pickup coil 133 which is to be arranged in the inductive wireless power transfer interface 105. Typically, the pickup coil 133 will be arranged between a surface of a housing of the wireless power transmit device 120 and a surface of a housing of the wireless power receive device 110, i.e. between the transmit coil 127 and the receive coil 117. This will enable the pickup coil 133 to generate electric signals by capturing the electro-magnetic signals exchanged between the wireless power transmit and receive devices 120, 110 pursuant to a wireless power transfer protocol 300, 310. The analyzer device 134, if it is not comprised in the probe device 132, connects to a probe interface 134 of the probe device 132 using a corresponding analyzer interface 137 of the analyzer device 134. The electromagnetic signals are transferred, using the interfaces 134, 137 to the analyzer device 134 where a processing unit 138 is comprised in the analyzer device 134. The probe device 132 may further comprise other sensors such as temperature sensors, etc., and sensor data from these sensors may also be received by the processing unit 138 through the interfaces 134, 137.

The analyzer device 134 will typically, using the processing unit 138, process the data and signals received from the probe device 132. The processing may comprise interpreting the signals sniffed by the pickup coil 133 to determine if the signaling conforms to e.g. the processes 300, 310 described in relation to Fig. 3 and Figs. 11-13. The analyzer device 134 may further be configured to provide the results of the determining as output to e.g. a user or the optional host device 136. Additionally or alternatively, the analyzer device 134 may be configured to log data and/or signals provided by the probe device 132. The logs could be stored in a memory device comprised in the analyzer device 134, connected to the analyzer device 134 and/or communicated to a user and/or the host device 136. These logs may be analyzed by the analyzer device 134 to determine the accuracy with regards to e.g. modulation accuracy, timing, power etc., over a period of time in order to, for instance, detect trends or identify isolated events.

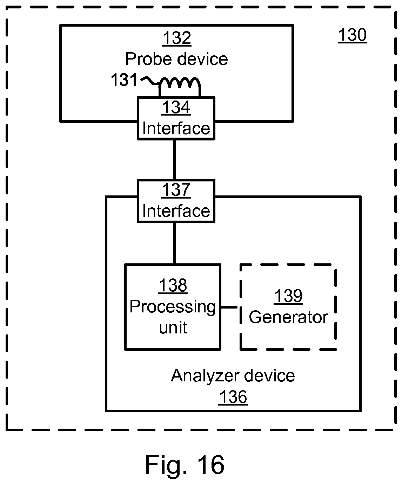

With reference to Fig. 16, one embodiment of the test system 130 is shown wherein the analyzer device 134 comprises an optional generator 139. The generator 139 may be configured to generate signals that are injected into the inductive wireless power transfer interface 105 by the probe device 132. These signals may be signals configured to trigger certain events related to the process 300, 310 to be tested. The generator 139 may be configured to generate signals, e.g. noise or other unwanted disturbances, that will affect the modulation quality of signals transmitted between power transmit device 120 and the power receive device 110. The disturbance signals may be configured such that they affect the first packet of the method 310 of Figs. 11-13, such that the signaling condition is fulfilled. In this embodiment, it is possible to verify if a power transmit device 120, a power receive device 110 and/or a wireless power transfer system 100 complies with the method 310 of Figs. 11-13.

As mentioned, the analyzer device 134 will be very useful in detecting if the method 310 is performed as intended and provide output to that respect. The output may be provided to an internal or external storage means, a user of the device or to the host device 136. In short, the probe device 132 will provide signals to the analyzer device 134 such that the analyzer can determine if the wireless power transfer system 100 is operating in the power transfer phase 308. If that it is the case, the analyzer device 134 will be configured to detect if one of the power transmit device 120 or the power receive device 110 transmits 311 a first data packet. The analyzer device 134 will be configured to detect that a data communication configurational change 319 is performed by the device 110, 120 transmitting the first packet. The analyzer device 134 may optionally be configured to monitor the inductive wireless power transfer interface 105 and detect if the signaling condition is fulfilled 313. The analyzer device 134 may further be configured to detect if e.g. a data communication configurational change 319 is performed without the signaling condition being fulfilled. Any detected deviations or violations of the processes 300, 310 described herein may result in the analyzer device 134 generating output indicating the deviation or violation.

## Claims

1. A method (310) for transferring data during power transfer (308) in a wireless power transfer system (100), wherein the wireless power transfer system (100) comprises a power transmit device (120) arranged to transfer (308) power over an inductive wireless power transfer interface (105) operating at a transmit frequency (f_{TX}) to a power receive device (110), the wireless power transfer system (100) being adapted to transfer (311) information at half duplex using Frequency Shift Keying, FSK, in one direction and Amplitude Shift Keying, ASK, in the other direction, the method (310) comprising:
transferring (308), at the transmit frequency (f_{TX}) by the power transmit device (120), power to the power receive device (110) and, during the transferring (308):
transmitting (311), at the transmit frequency (f_{TX}) by one of the power transmit device (120) or the power receive device (110), a first data packet to the other of the power transmit device (120) or the power receive device (110) using one of two modulation types being FSK or ASK and, during the transmitting (311):
determining (313), by the device (110, 120) transmitting (311) the first data packet, if a signaling condition relating to the transmission of the first data packet is fulfilled, wherein determining (313) if a signaling condition is fulfilled comprises evaluating (315) a modulation accuracy of a signal comprising the first data packet and if the evaluated (315) modulation accuracy is lower than a modulation accuracy threshold, the signaling condition is determined to be fulfilled, and
if the signaling condition relating to the transmission of the first data packet is fulfilled, changing (319) a data communication configuration of the device (110, 120) transmitting the first data packet.

2. The method (310) of claim 1, wherein the power transmit device (120) is configured to transmit (311) information using FSK and receive (311) information using ASK, and the power receive device is configured to transmit (311) information using ASK and to receive (311) information using FSK.

3. The method (310) of claim 1 or 2, wherein the data communication configuration changed is one of a predefined or configurable set of modulation parameters comprising at least one of:
one or more modulation indexes,
one or more symbol rates, or
one or more bits per symbol values.

4. The method (310) of any of claims 1 to 3, wherein the device (110, 120) transmitting (311) the first data packet is the power receive device (110) and the data communication configuration changed is a modulation index in the form of an amplitude deviation.

5. The method (310) of any of claims 1 to 3, wherein the device (110, 120) transmitting (311) the first data packet is the power transmit device (120) and the data communication configuration changed being a change in the transmit frequency (f_{TX}) and/or a modulation index in the form a frequency deviation.

6. The method (310) of claim 1, wherein evaluating (315) the modulation accuracy comprises evaluating (315) an amplitude of the signal comprising the first data packet.

7. The method (310) of any of claims 1 to 6, wherein the step of changing (319) comprises, iteratively:
changing (319) the configuration until the signaling condition is no longer determined to be fulfilled or a predefined or configurable set of configurations have been evaluated.

8. The method (310) of claim 7, wherein the iteratively changing (319) further comprises:
evaluating (315) a Signal Quality Indicator, SQI, and/or a transferred power for each of the predefined or configurable set of data communication configurations, and
if (313, 314) at least one signaling condition is fulfilled for each of the predefined or configurable set of data communication configurations, change (319, 316) to the configuration having had the highest SQI and/or the highest transferred power.

9. The method (310) of any of the claims 1 to 8, wherein the signaling condition is determined (313) to be fulfilled if an operational feedback is received (317) from the device receiving the first packet.

10. The method (310) of claim 9, further comprising:
receiving, by the device (110, 120) not transmitting the first data packet, the first data packet and, during the receiving
evaluating, by the device (110, 120) not transmitting the first data packet, a signal quality of the signal comprising the first packet, and if the evaluated quality of the signal comprising the first data packet fails to meet a threshold signal quality,
transmitting, by the device (110, 120) not transmitting the first data packet, at the transmit frequency (f_{TX}) operational information using the other of said one of two modulation types being FSK or ASK, thereby providing said operational feedback.

11. A power receive device (110), arrangeable in a wireless power transfer system (100) to receive power over an inductive wireless power transfer interface (105) operating at a transmit frequency (f_{TX}) from a power transmit device (120), the wireless power transfer system (100) being adapted to transfer information at half duplex using Frequency Shift Keying, FSK, in one direction and Amplitude Shift Keying, ASK, in the other direction, wherein the power receive device (110) comprises a receive controller (111) operatively connected to a power receive circuitry (112), and wherein the power receive device (110) is configured to cause the power receive circuitry (112) to:
receive, at the transmit frequency (f_{TX}), power from the power transmit device (120), and, during the receiving:
transmit, at the transmit frequency (f_{TX}), a first data packet to the power transmit device (120) and, during the transmitting:
determine if a signaling condition relating to the transmission of the first data packet is fulfilled, wherein determining if a signaling condition is fulfilled comprises evaluating a modulation accuracy of a signal comprising the first data packet and if the evaluated modulation accuracy is lower than a modulation accuracy threshold, the signaling condition is determined to be fulfilled, and
if the signaling condition relating to the transmission of the first data packet is fulfilled, change a data communication configuration of the power receive device (110).

12. The power receive device (110) of claim 11, further configured to perform the functionality of the power receive device (110) as recited in the method (310) of any of the claims 2 to 10.

13. A power transmit device (120), arrangeable in a wireless power transfer system (100) to transmit power over an inductive wireless power transfer interface (105) operating at a transmit frequency (f_{TX}) to a power receive device (110), the wireless power transfer system (100) being adapted to transfer information at half duplex using Frequency Shift Keying, FSK, in one direction and Amplitude Shift Keying, ASK, in the other direction, wherein the power transmit device (120) comprises a transmit controller (121) operatively connected to a power transmit circuitry (122), and wherein the power transmit device (120) is configured to cause the power transmit circuitry (122) to:
transmit, at the transmit frequency (f_{TX}), power to the power receive device (110), and, during the transmitting of power:
transmit, at the transmit frequency (f_{TX}), a first data packet to the power receive device (110) and, during the transmitting of the first data packet:
determine if a signaling condition relating to the transmission of the first data packet is fulfilled, wherein determining if a signaling condition is fulfilled comprises evaluating a modulation accuracy of a signal comprising the first data packet and if the evaluated modulation accuracy is lower than a modulation accuracy threshold, the signaling condition is determined to be fulfilled, and
if the signaling condition relating to the transmission of the first data packet is fulfilled, changing a data communication configuration of the power transmit device (120).

14. The power transmit device (120) of claim 13, further configured to perform the functionality of the power transmit device (120) as recited in the method (310) of any of the claims 2 to 10.

15. A test system (130) comprising a probe device (132) and an analyzer device (136), the probe device (132) being arrangeable in a wireless power transfer system (100) that comprises a power transmit device (120) arranged to transfer power over an inductive wireless power transfer interface (105) operating at a transmit frequency (f_{TX}) to a power receive device (110), the wireless power transfer system (100) being of a type which is adapted to transfer information at half duplex using Frequency Shift Keying, FSK, in one direction and Amplitude Shift Keying, ASK, in the other direction,
wherein the probe device (132) comprises at least one pickup coil (133) and further comprises or is operatively connected to said probe analyzer device (134), and
wherein the analyzer device (134) is configured to, when the probe device (132) is arranged in the wireless power transfer system (100):
detect a transferring (308), at the transmit frequency (f_{TX}) by the power transmit device (120), of power to the power receive device (110) and, during the transferring (308):
detect a transmitting (311), at the transmit frequency (f_{TX}) by one of the power transmit device (120) or the power receive device (110), of a first data packet to the other of the power transmit device (120) or the power receive device (110) using one of two modulation types being FSK or ASK,
determine whether a signaling condition is fulfilled, wherein the signaling condition being fulfilled is a modulation accuracy of a signal comprising the first data packet being lower than a modulation accuracy threshold,
detect a change in a data communication configuration by the device (110, 120) transmitting the first data packet, and
provide information regarding the detections as output.

16. The test system (130) of claim 15, further configured to:
determine, prior to detecting the change in data communication configuration, whether a signaling condition is fulfilled, wherein the signaling condition being fulfilled is operational feedback having been provided to the device (110, 120) transmitting the first data packet by the device (110, 120) receiving the first data packet.

17. The test system (130) of claim 16, further configured to detect if the configuration is changed without the signaling condition being fulfilled and to generate an output to that respect.

18. The test system (130) of any of claims 15 to 17, wherein the analyzer device (134) further comprises a generator (139) configurable, by the analyzer device (134), to inject signals into the inductive wireless power transfer interface (105) such that the signaling condition is fulfilled.

19. The test system (130) of any of claims 15 to 18, wherein the analyzer device (134) is further configured to detect any of the data configuration changes in the method (310) of claims 2 to 10.

## Patentansprüche

1. Verfahren (310) zum Übertragen von Daten während einer Leistungsübertragung (308) in einem drahtlosen Leistungsübertragungssystem (100), wobei das drahtlose Leistungsübertragungssystem (100) eine Leistungssendevorrichtung (120) umfasst, die ausgelegt ist, eine Leistung über eine induktive drahtlose Leistungsübertragungsschnittstelle (105), die bei einer Sendefrequenz (f_{TX}) arbeitet, an eine Leistungsempfangsvorrichtung (110) zu übertragen, wobei das drahtlose Leistungsübertragungssystem (100) ausgelegt ist, Informationen im Halbduplexverfahren unter Verwendung einer Frequenzumtastung, FSK, in einer Richtung und einer Amplitudenumtastung, ASK, in der anderen Richtung zu übertragen, wobei das Verfahren (310) umfasst:
Übertragen (308) bei der Sendefrequenz (f_{TX}) durch die Leistungssendevorrichtung (120) von Leistung an die Leistungsempfangsvorrichtung (110) und während des Übertragens (308):
Senden (311) bei der Sendefrequenz (f_{TX}) durch eine der Leistungssendevorrichtung (120) oder der Leistungsempfangsvorrichtung (110) eines ersten Datenpakets an die andere der Leistungssendevorrichtung (120) und der Leistungsempfangsvorrichtung (110) unter Verwendung eines von zwei Modulationstypen, die FSK oder ASK sind, und während des Sendens (311):
Bestimmen (313) durch die Vorrichtung (110, 120), die das erste Datenpaket sendet (311), ob eine Signalisierungsbedingung, die sich auf die Übertragung des ersten Datenpakets bezieht, erfüllt ist, wobei das Bestimmen (313), ob eine Signalisierungsbedingung erfüllt ist, umfasst, eine Modulationsgenauigkeit eines Signals zu beurteilen (315), das das erste Datenpaket umfasst, und dann, wenn die beurteilte (315) Modulationsgenauigkeit niedriger als ein Modulationsgenauigkeitsschwellenwert ist, bestimmt wird, dass die Signalisierungsbedingung erfüllt ist, und
dann, wenn die Signalisierungsbedingung, die sich auf die Übertragung des ersten Datenpakets bezieht, erfüllt ist, Ändern (319) einer Datenkommunikationskonfiguration der Vorrichtung (110, 120), die das erste Datenpaket sendet.

2. Verfahren (310) nach Anspruch 1, wobei die Leistungssendevorrichtung (120) konfiguriert ist, Informationen und Verwendung von FSK zu senden (311) und Informationen unter Verwendung von ASK zu empfangen, und die Leistungsempfangsvorrichtung konfiguriert ist, Informationen unter Verwendung von ASK zu senden und Informationen unter Verwendung von FSK zu empfangen (311).

3. Verfahren (310) nach Anspruch 1 oder 2, wobei die geänderte Datenkommunikationskonfiguration ein Parameter einer m Voraus definierten oder konfigurierbaren Gruppe von Modulationsparametern ist, die zumindest eines umfassen von:
einen oder mehrere Modulationsindizes,
eine oder mehrere Symbolraten oder
ein oder mehrere Bits pro Symbolwert.

4. Verfahren (310) nach einem der Ansprüche 1 bis 3, wobei die Vorrichtung (110, 120), die das erste Datenpaket sendet (311), die Leistungsempfangsvorrichtung (110) ist und die geänderte Datenkommunikationskonfiguration ein Modulationsindex in der Form einer Amplitudenabweichung ist.

5. Verfahren (310) nach einem der Ansprüche 1 bis 3, wobei die Vorrichtung (110, 120), die das erste Datenpaket sendet (311), die Leistungssendevorrichtung (120) ist, und die geänderte Datenkommunikationskonfiguration eine Änderung der Sendefrequenz (f_{TX}) und/oder eines Modulationsindexes in der Form einer Frequenzabweichung ist.

6. Verfahren (310) nach Anspruch 1, wobei das Beurteilen (315) der Modulationsgenauigkeit umfasst, eine Amplitude des Signals zu beurteilen (315), das das erste Datenpaket umfasst.

7. Verfahren (310) nach einem der Ansprüche 1 bis 6, wobei der Schritt des Änderns (319) umfasst:
iteratives Ändern (319) der Konfiguration, bis nicht länger bestimmt wird, dass die Signalisierungsbedingung erfüllt ist, oder eine im Voraus definierte oder konfigurierbare Gruppe von Konfigurationen beurteilt wurden.

8. Verfahren (310) nach Anspruch 7, wobei das iterative Ändern (319) ferner umfasst:
Beurteilen (315) eines Signalqualitätsindikators, SQI, und/oder einer übertragenen Leistung für jede der im Voraus definierten oder konfigurierbaren Gruppe von Datenkommunikationskonfigurationen und
dann, wenn (313, 314) mindestens eine Signalisierungsbedingung für jede der im Voraus definierten oder konfigurierbaren Gruppe von Datenkommunikationskonfigurationen erfüllt ist, Wechseln (319, 316) zu der Konfiguration, die den höchsten SQI und/oder die höchste übertragene Leistung hatte.

9. Verfahren (310) nach einem der Ansprüche 1 bis 8, wobei bestimmt wird (313), dass die Signalisierungsbedingung erfüllt ist, wenn eine Betriebsrückmeldung von der Vorrichtung, die das erste Paket empfängt, empfangen wird (317).

10. Verfahren (310) nach Anspruch 9, das ferner umfasst:
Empfangen durch die Vorrichtung (110, 120), die das erste Datenpaket nicht sendet, des ersten Datenpakets und während des Empfangens:
Beurteilen durch die Vorrichtung (110, 120), die das erste Datenpaket nicht sendet, einer Signalqualität des Signals, das das erste Paket umfasst, und wenn die beurteilte Qualität des Signals, das das erste Datenpaket umfasst, scheitert, eine Schwellenwertsignalqualität zu erfüllen,
Senden von Betriebsinformationen durch die Vorrichtung (110, 120), die das erste Datenpaket nicht sendet, bei der Sendefrequenz (f_{TX}) unter Verwendung des anderen der beiden Modulationstypen, die FSK und ASK sind, wodurch die Betriebsrückmeldung geliefert wird.

11. Leistungsempfangsvorrichtung (110), die in einem drahtlosen Leistungsübertragungssystem (100) angeordnet werden kann, um Leistung über eine induktive drahtlose Leistungsübertragungsschnittstelle (105), die bei einer Sendefrequenz (f_{TX}) arbeitet, von einer Leistungssendevorrichtung (120) zu empfangen, wobei das drahtlose Leistungsübertragungssystem (100) ausgelegt ist, Informationen im Halbduplexverfahren unter Verwendung einer Frequenzumtastung, FSK, in eine Richtung und einer Amplitudenumtastung, ASK, in die andere Richtung zu übertragen, wobei die Leistungsempfangsvorrichtung (110) eine Empfangssteuereinheit (111) umfasst, die betriebstechnisch an eine Leistungsempfangsschaltung (112) gekoppelt ist, und wobei die Leistungsempfangsvorrichtung (110) konfiguriert ist, zu bewirken, dass die Leistungsempfangsschaltung (112) ausführt:
Empfangen bei der Sendefrequenz (f_{TX}) von Leistung von der Leistungssendevorrichtung (120) und während des Empfangens:
Senden bei der Sendefrequenz (f_{TX}) eines ersten Datenpakets an die Leistungssendevorrichtung (120) und während des Sendens:
Bestimmen, ob eine Signalisierungsbedingung, die sich auf die Übertragung des ersten Datenpakets bezieht, erfüllt ist, wobei das Bestimmen, ob eine Signalisierungsbedingung erfüllt ist, umfasst, eine Modulationsgenauigkeit eines Signals zu beurteilen, das das erste Datenpaket umfasst, und dann wenn die beurteilte Modulationsgenauigkeit niedriger als ein Modulationsgenauigkeitsschwellenwert ist, bestimmt wird, dass die Signalisierungsbedingung erfüllt ist, und
dann, wenn die Signalisierungsbedingung, die sich auf die Übertragung des ersten Datenpakets bezieht, erfüllt ist, Ändern einer Datenkommunikationskonfiguration der Leistungsempfangsvorrichtung (110).

12. Leistungsempfangsvorrichtung (110) nach Anspruch 11, die ferner konfiguriert ist, die Funktionalität der Leistungsempfangsvorrichtung (110) wie in dem Verfahren (310) nach einem der Ansprüche 2 bis 10 beschrieben auszuführen.

13. Leistungssendevorrichtung (120), die in einem drahtlosen Leistungsübertragungssystem (100) angeordnet werden kann, um Leistung über eine induktive drahtlose Leistungsübertragungsschnittstelle (105), die bei einer Sendefrequenz (f_{TX}) arbeitet, an eine Leistungsempfangsvorrichtung (110) zu senden, wobei das drahtlose Leistungsübertragungssystem (100) ausgelegt ist, Informationen im Halbduplexverfahren unter Verwendung einer Frequenzumtastung, FSK, in einer Richtung und einer Amplitudenumtastung, ASK, in der anderen Richtung zu übertragen, wobei die Leistungssendevorrichtung (120) eine Sendesteuereinheit (121) umfasst, die betriebstechnisch mit einer Leistungssendeschaltung (122) verbunden ist, und wobei die Leistungssendevorrichtung (120) konfiguriert ist, zu bewirken, dass die Leistungssendeschaltung (122) ausführt:
Senden bei der Sendefrequenz (f_{TX}) von Leistung an die Leistungsempfangsvorrichtung (110) und während des Sendens der Leistung:
Senden bei der Sendefrequenz (f_{TX}) eines ersten Datenpakets an die Leistungsempfangsvorrichtung (110) und während des Sendens des ersten Datenpakets:
Bestimmen, ob eine Signalisierungsbedingung, die sich auf die Übertragung des ersten Datenpakets bezieht, erfüllt ist, wobei das Bestimmen, ob eine Signalisierungsbedingung erfüllt ist, umfasst, eine Modulationsgenauigkeit eines Signals zu beurteilen, das das erste Datenpaket umfasst, und dann, wenn die beurteilte Modulationsgenauigkeit niedriger als ein Modulationsgenauigkeitsschwellenwert ist, bestimmt wird, dass die Signalisierungsbedingung erfüllt ist, und
dann, wenn die Signalisierungsbedingung, die sich auf die Übertragung des ersten Datenpakets bezieht, erfüllt ist, Ändern einer Datenkommunikationskonfiguration der Leistungssendevorrichtung (120).

14. Leistungssendevorrichtung (120) nach Anspruch 13, die ferner konfiguriert ist, die Funktionalität der Leistungssendevorrichtung (120) wie in dem Verfahren (310) nach einem der Ansprüche 2 bis 10 beschrieben auszuführen.

15. Testsystem (130), das eine Sondenvorrichtung (132) und eine Analysevorrichtung (136) umfasst, wobei die Sondenvorrichtung (132) in einem drahtlosen Leistungsübertragungssystem (100) angeordnet werden kann, das eine Leistungssendevorrichtung (120) umfasst, die ausgelegt ist, Leistung über eine induktive drahtlose Leistungsübertragungsschnittstelle (105), die bei einer Sendefrequenz (f_{TX}) arbeitet, an eine Leistungsempfangsvorrichtung (110) zu übertragen, wobei das drahtlose Leistungsübertragungssystem (100) von einem Typ ist, der ausgelegt ist, Informationen im Halbduplexverfahren unter Verwendung einer Frequenzumtastung, FSK, in eine Richtung und einer Amplitudenumtastung, ASK, in die andere Richtung zu übertragen,
wobei die Sondenvorrichtung (132) mindestens eine Aufnahmespule (133) umfasst und ferner die Sendeanalysevorrichtung (134) umfasst oder betriebstechnisch mit ihr verbunden ist und
wobei die Analysevorrichtung (134) konfiguriert ist, dann, wenn die Sondenvorrichtung (132) in dem drahtlosen Leistungsübertragungssystem (100) angeordnet ist, zum:
Detektieren einer Übertragung (308) von Leistung bei der Sendefrequenz (f_{TX}) durch die Leistungssendevorrichtung (120) an die Leistungsempfangsvorrichtung (110) und während des Übertragens (308):
Detektieren eines Sendens (311) eines ersten Datenpakets bei der Sendefrequenz (f_{TX}) durch eine der Leistungssendevorrichtung (120) oder der Leistungsempfangsvorrichtung (110) an die andere der Leistungssendevorrichtung (120) oder der Leistungsempfangsvorrichtung (110) unter Verwendung eines von zwei Modulationstypen, die FSK oder ASK sind,
Bestimmen, ob eine Signalisierungsbedingung erfüllt ist, wobei die Signalisierungsbedingung, die erfüllt ist, ist, dass eine Modulationsgenauigkeit eines Signals, das das erste Datenpaket umfasst, niedriger als ein Modulationsgenauigkeitsschwellenwert ist,
Detektieren einer Änderung einer Datenkommunikationskonfiguration durch die Vorrichtung (110, 120), die das erste Datenpaket sendet,
Bereitstellen von Informationen bezüglich der Detektionen als Ausgabe.

16. Testsystem (130) nach Anspruch 15, das ferner konfiguriert ist zum:
Bestimmen vor dem Detektieren der Änderung der Datenkommunikationskonfiguration, ob eine Signalisierungsbedingung erfüllt ist, wobei die Signalisierungsbedingung, die erfüllt ist, ist, dass eine Betriebsrückmeldung an die Vorrichtung (110, 120), die das erste Datenpaket sendet, durch die Vorrichtung (110, 120), die das erste Datenpaket empfängt, geliefert wurde.

17. Testsystem (130) nach Anspruch 16, das ferner konfiguriert ist, zu detektieren, ob die Konfiguration geändert wurde, ohne dass die Signalisierungsbedingung erfüllt ist, und diesbezüglich eine Ausgabe zu erzeugen.

18. Testsystem (130) nach einem der Ansprüche 15 bis 17, wobei die Analysevorrichtung (134) ferner einen Generator (139) umfasst, der durch die Analysevorrichtung (134) konfigurierbar ist, Signale in die induktive drahtlose Leistungsübertragungsschnittstelle (105) einzuspeisen, so dass die Signalisierungsbedingung erfüllt ist.

19. Testsystem (130) nach einem der Ansprüche 15 bis 18, wobei die Analysevorrichtung (134) ferner konfiguriert ist, eine beliebige der Datenkonfigurationsänderungen in dem Verfahren (310) nach den Ansprüchen 2 bis 10 zu detektieren.

## Revendications

1. Procédé (310) pour transférer des données durant un transfert de puissance (308) dans un système de transfert de puissance sans fil (100), dans lequel l'un système de transfert de puissance sans fil (100) comprend un dispositif de transmission de puissance (120) agencé pour transférer (308) une puissance sur une interface de transfert inductif de puissance sans fil (105) fonctionnant à une fréquence de transmission (f_{TX}) à un dispositif de réception de puissance (110), le système de transfert de puissance sans fil (100) étant adapté pour transférer (311) des informations en semi-duplex en utilisant une modulation par déplacement de fréquence, FSK, dans une direction et une modulation par déplacement d'amplitude, ASK, dans l'autre direction, le procédé (310) comprenant :
le transfert (308), à la fréquence de transmission (f_{TX}) par le dispositif de transmission de puissance (120), d'une puissance au dispositif de réception de puissance (110) et, durant le transfert (308) :
la transmission (311), à la fréquence de transmission (f_{TX}) par un parmi le dispositif de transmission de puissance (120) ou le dispositif de réception de puissance (110), d'un premier paquet de données à l'autre parmi le dispositif de transmission de puissance (120) ou le dispositif de réception de puissance (110) en utilisant un des deux types de modulation qui est FSK ou ASK et, durant la transmission (311) :
la détermination (313), par le dispositif (110, 120) transmettant (311) le premier paquet de données, si une condition de signalisation concernant la transmission du premier paquet de données est remplie, dans lequel la détermination (313) si une condition de signalisation est remplie comprend l'évaluation (315) d'une précision de modulation d'un signal comprenant le premier paquet de données et si la précision de modulation évaluée (315) est inférieure à un seuil de précision de modulation, la condition de signalisation est déterminée comme étant remplie, et
si la condition de signalisation concernant la transmission du premier paquet de données est remplie, le changement (319) d'une configuration de communication de données du dispositif (110, 120) transmettant le premier paquet de données.

2. Procédé (310) selon la revendication 1, dans lequel le dispositif de transmission de puissance (120) est configuré pour transmettre (311) des informations en utilisant FSK et recevoir (311) des informations en utilisant ASK, et le dispositif de réception de puissance est configuré pour transmettre (311) des informations en utilisant ASK et recevoir (311) des informations en utilisant FSK.

3. Procédé (310) selon la revendication 1 ou 2, dans lequel la configuration de communication de données changée est un parmi un ensemble prédéfini ou configurable de paramètres de modulation comprenant au moins un parmi :
un ou plusieurs indices de modulation,
un ou plusieurs débits de symboles, ou
une ou plusieurs valeurs de bits par symbole.

4. Procédé (310) selon l'une quelconque des revendications 1 à 3, dans lequel le dispositif (110, 120) transmettant (311) le premier paquet de données est le dispositif de réception de puissance (110) et la configuration de communication de données changée est un indice de modulation sous la forme d'une déviation d'amplitude.

5. Procédé (310) selon l'une quelconque des revendications 1 à 3, dans lequel le dispositif (110, 120) transmettant (311) le premier paquet de données est le dispositif de transmission de puissance (120) et la configuration de communication de données changée étant un changement de la fréquence de transmission (f_{TX}) et/ou un indice de modulation sous la forme d'une déviation de fréquence.

6. Procédé (310) selon la revendication 1, dans lequel l'évaluation (315) de la précision de modulation comprend l'évaluation (315) d'une amplitude du signal comprenant le premier paquet de données.

7. Procédé (310) selon l'une quelconque des revendications 1 à 6, dans lequel l'étape de changement (319) comprend, de manière itérative :
le changement (319) de la configuration jusqu'à ce que la condition de signalisation ne soit plus déterminée comme étant remplie ou qu'un ensemble prédéfini ou configurable de configurations ait été évalué.

8. Procédé (310) selon la revendication 7, dans lequel le changement de manière itérative (319) comprend en outre :
l'évaluation (315) d'un indicateur de qualité de signal, SQI, et/ou d'une puissance transférée pour chacune de l'ensemble prédéfini ou configurable de configurations de communication de données, et
si (313, 314) au moins une condition de signalisation est remplie pour chacune de l'ensemble prédéfini ou configurable de configurations de communication de données, le changement (319, 316) sur la configuration ayant eu le SQI le plus élevé et/ou la puissance transférée la plus élevée.

9. Procédé (310) selon l'une quelconque des revendications 1 à 8, dans lequel la condition de signalisation est déterminée (313) comme étant remplie si une rétroaction de fonctionnement est reçue (317) à partir du dispositif recevant le premier paquet.

10. Procédé (310) selon la revendication 9, comprenant en outre :
la réception, par le dispositif (110, 120) ne transmettant pas le premier paquet de données, du premier paquet de données et, durant la réception
l'évaluation, par le dispositif (110, 120) ne transmettant pas le premier paquet de données, d'une qualité de signal du signal comprenant le premier paquet et, si la qualité évaluée du signal comprenant le premier paquet de données ne satisfait pas une qualité de signal de seuil,
la transmission, par le dispositif (110, 120) ne transmettant pas le premier paquet de données, à la fréquence de transmission (f_{TX}), d'informations de fonctionnement en utilisant l'autre dudit un de deux types de modulation étant FSK ou ASK, en fournissant ainsi ladite rétroaction de fonctionnement.

11. Dispositif de réception de puissance (110), pouvant être agencé dans un système de transfert de puissance sans fil (100) pour recevoir une puissance sur une interface de transfert inductif de puissance sans fil (105) fonctionnant à une fréquence de transmission (f_{TX}) à partir d'un dispositif de transmission de puissance (120), le système de transfert de puissance sans fil (100) étant adapté pour transférer des informations en semi-duplex en utilisant une modulation par déplacement de fréquence, FSK, dans une direction et une modulation par déplacement d'amplitude, ASK, dans l'autre direction, dans lequel le dispositif de réception de puissance (110) comprend un dispositif de commande de réception (111) connecté en fonctionnement à une circuiterie de réception de puissance (112), et dans lequel le dispositif de réception de puissance (110) est configuré pour amener la circuiterie de réception de puissance (112) à :
recevoir, à la fréquence de transmission (f_{TX}), une puissance à partir du dispositif de transmission de puissance (120) et, durant la réception :
transmettre, à la fréquence de transmission (f_{TX}), un premier paquet de données au dispositif de transmission de puissance (120) et, durant la transmission :
déterminer si une condition de signalisation concernant la transmission du premier paquet de données est remplie, dans lequel la détermination si une condition de signalisation est remplie comprend l'évaluation d'une précision de modulation d'un signal comprenant le premier paquet de données et si la précision de modulation évaluée est inférieure à un seuil de précision de modulation, la condition de signalisation est déterminée comme étant remplie, et
si la condition de signalisation concernant la transmission du premier paquet de données est remplie, changer une configuration de communication de données du dispositif de réception de puissance (110).

12. Dispositif de réception de puissance (110) selon la revendication 11, configuré en outre pour réaliser la fonctionnalité du dispositif de réception de puissance (110) telle qu'énoncée dans le procédé (310) selon l'une quelconque des revendications 2 à 10.

13. Dispositif de transmission de puissance (120), pouvant être agencé dans un système de transfert de puissance sans fil (100) pour transférer une puissance sur une interface de transfert inductif de puissance sans fil (105) fonctionnant à une fréquence de transmission (f_{TX}) à un dispositif de réception de puissance (110), le système de transfert de puissance sans fil (100) étant adapté pour transférer des informations en semi-duplex en utilisant une modulation par déplacement de fréquence, FSK, dans une direction et une modulation par déplacement d'amplitude, ASK, dans l'autre direction, dans lequel le dispositif de transmission de puissance (120) comprend un dispositif de commande de transmission (121) connecté en fonctionnement à une circuiterie de transmission de puissance (122), et dans lequel le dispositif de transmission de puissance (120) est configuré pour amener la circuiterie de transmission de puissance (122) à :
transmettre, à la fréquence de transmission (f_{TX}), une puissance au dispositif de réception de puissance (110) et, durant la transmission de puissance :
transmettre, à la fréquence de transmission (f_{TX}), un premier paquet de données au dispositif de réception de puissance (110) et, durant la transmission du premier paquet de données :
déterminer si une condition de signalisation concernant la transmission du premier paquet de données est remplie, dans lequel la détermination si une condition de signalisation est remplie comprend l'évaluation d'une précision de modulation d'un signal comprenant le premier paquet de données et si la précision de modulation évaluée est inférieure à un seuil de précision de modulation, la condition de signalisation est déterminée comme étant remplie, et
si la condition de signalisation concernant la transmission du premier paquet de données est remplie, changer une configuration de communication de données du dispositif de transmission de puissance (120).

14. Dispositif de transmission de puissance (120) selon la revendication 13, configuré en outre pour réaliser la fonctionnalité du dispositif de transmission de puissance (120) telle qu'énoncée dans le procédé (310) selon l'une quelconque des revendications 2 à 10.

15. Système de test (130) comprenant un dispositif sonde (132) et un dispositif analyseur (136), le dispositif sonde (132) pouvant être agencé dans un système de transfert de puissance sans fil (100) qui comprend un dispositif de transmission de puissance (120) agencé pour transférer une puissance sur une interface de transfert inductif de puissance sans fil (105) fonctionnant à une fréquence de transmission (f_{TX}), à un dispositif de réception de puissance (110), le système de transfert de puissance sans fil (100) étant d'un type qui est adapté pour transférer des informations en semi-duplex en utilisant une modulation par déplacement de fréquence, FSK, dans une direction et une modulation par déplacement d'amplitude, ASK, dans l'autre direction,
dans lequel le dispositif sonde (132) comprend au moins une bobine de capteur (133) et comprend en outre ou est connecté en fonctionnement avec ledit dispositif analyseur à sonde (134), et
dans lequel le dispositif analyseur (134) est configuré pour, quand le dispositif sonde (132) est agencé dans le système de transfert de puissance sans fil (100) :
détecter un transfert (308), à la fréquence de transmission (f_{TX}) par le dispositif de transmission de puissance (120), d'une puissance au dispositif de réception de puissance (110) et, durant le transfert (308) :
détecter une transmission (311), à la fréquence de transmission (f_{TX}) par un parmi le dispositif de transmission de puissance (120) ou le dispositif de réception de puissance (110), d'un premier paquet de données à l'autre parmi le dispositif de transmission de puissance (120) ou le dispositif de réception de puissance (110) en utilisant un des deux types de modulation qui est FSK ou ASK,
déterminer si une condition de signalisation est remplie, dans lequel la condition de signalisation qui est remplie est qu'une précision de modulation d'un signal comprenant le premier paquet de données soit inférieure à un seuil de précision de modulation,
détecter un changement dans une configuration de communication de données par le dispositif (110, 120) transmettant le premier paquet de données, et
fournir des informations concernant les détections comme une sortie.

16. Système de test (130) selon la revendication 15, configuré en outre pour :
déterminer, avant de détecter le changement dans une configuration de communication de données, si une condition de signalisation est remplie, dans lequel la condition de signalisation qui est remplie est qu'une rétroaction de fonctionnement ait été fournie au dispositif (110, 120) transmettant le premier paquet de données par le dispositif (110, 120) recevant le premier paquet de données.

17. Système de test (130) selon la revendication 16, configuré en outre pour détecter si la configuration est changée sans que la condition de signalisation soit remplie et pour générer une sortie à cet effet.

18. Système de test (130) selon l'une quelconque des revendications 15 à 17, dans lequel le dispositif analyseur (134) comprend en outre un générateur (139) pouvant être configuré, par le dispositif analyseur (134), pour injecter des signaux dans l'interface de transfert inductif de puissance sans fil (105) de manière que la condition de signalisation soit remplie.

19. Système de test (130) selon l'une quelconque des revendications 15 à 18, dans lequel le dispositif analyseur (134) est configuré en outre pour détecter n'importe lequel des changements de configuration de données dans le procédé (310) selon les revendications 2 à 10.
